(19) Europäisches Patentamt / European Patent Office / Office européen des brevets

(11) **EP 3 202 077 B1**

(12) **FASCICULE DE BREVET EUROPEEN**

(45) Date de publication et mention
de la délivrance du brevet:
**16.09.2020 Bulletin 2020/38**

(21) Numéro de dépôt: **15785161.9**

(22) Date de dépôt: **29.09.2015**

(51) Int Cl.:
**H04L 5/00** *(2006.01)*  **H04L 27/26** *(2006.01)*
**H04L 25/02** *(2006.01)*

(86) Numéro de dépôt international:
**PCT/FR2015/052582**

(87) Numéro de publication internationale:
**WO 2016/051062 (07.04.2016 Gazette 2016/14)**

(54) **PROCÉDÉ D'ÉMISSION D'UN SIGNAL MULTI-PORTEUSES, PROCÉDÉ DE RÉCEPTION, DISPOSITIFS, ET PROGRAMMES D'ORDINATEURS ASSOCIÉS METTANT EN OEUVRE UNE MODULATION DE TYPE OQAM**

VERFAHREN ZUM SENDEN EINES MEHRTRÄGERSIGNALS, VERFAHREN ZUM EMPFANG, VORRICHTUNGEN UND COMPUTERPROGRAMME IM ZUSAMMENHANG DAMIT ZUR IMPLEMENTIERUNG EINER MODULATION VOM OQAM-TYP

METHOD OF SENDING A MULTICARRIER SIGNAL, METHOD OF RECEPTION, DEVICES, AND COMPUTER PROGRAMS ASSOCIATED THEREWITH IMPLEMENTING AN OQAM TYPE MODULATION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **03.10.2014 FR 1459532**

(43) Date de publication de la demande:
**09.08.2017 Bulletin 2017/32**

(73) Titulaire: **B<>COM**
**35510 Cesson-Sévigné (FR)**

(72) Inventeur: **LIN, Hao**
**35700 Rennes (FR)**

(56) Documents cités:
• DU J ET AL: "Novel Preamble-Based Channel Estimation for OFDM/OQAM Systems", IEEE INTERNATIONAL CONFERENCE ON COMMUNICATIONS, 14 juin 2009 (2009-06-14), pages 1-6, XP031506200, IEEE, PISCATAWAY, NJ, USA ISBN: 978-1-4244-3435-0
• FUSCO T ET AL: "Joint symbol timing and CFO estimation in multiuser OFDM/OQAM systems", SIGNAL PROCESSING ADVANCES IN WIRELESS COMMUNICATIONS, 21 juin 2009 (2009-06-21), pages 613-617, XP031487900, IEEE, PISCATAWAY, NJ, USA ISBN: 978-1-4244-3695-8

• HU S ET AL: "Preamble Design with ICI Cancellation for Channel Estimation in OFDM/OQAM System", IEICE TRANSACTIONS ON COMMUNICATIONS, COMMUNICATIONS SOCIETY, vol. E93B, no. 1, 1 janvier 2010 (2010-01-01), pages 211-214, XP001552510, TOKYO, JP ISSN: 0916-8516, DOI: 10.1587/TRANSCOM.E93.B.211
• RODRIGUES R ET AL: "Training Sequence Design for Channel Estimation with Nonlinear OQPSK-Type Modulations", VEHICULAR TECHNOLOGY CONFERENCE (VTC FALL), 3 septembre 2012 (2012-09-03), pages 1-5, XP032294626, IEEE,Piscataway, NJ, USA DOI: 10.1109/VTCFALL.2012.6399051 ISBN: 978-1-4673-1880-8
• GOLJAHANI A ET AL: "Superimposed technique for OFDM/OQAM based digital terrestrial television broadcasting", ELECTRICAL AND ELECTRONICS ENGINEERS IN ISRAEL, 2008. IEEEI 2008. IEEE 25TH CONVENTION OF, 3 décembre 2008 (2008-12-03), pages 323-327, XP031399589, IEEE, PISCATAWAY, NJ, USA ISBN: 978-1-4244-2481-8

EP 3 202 077 B1

- THEIN CHRISTOPH ET AL: "Frequency-domain processing for synchronization and channel estimation in OQAM-OFDM systems", 2013 IEEE 14TH WORKSHOP ON SIGNAL PROCESSING ADVANCES IN WIRELESS COMMUNICATIONS (SPAWC), 16 juin 2013 (2013-06-16), pages 634-638, XP032490342, IEEE,Piscataway, NJ, USA ISSN: 1948-3244, DOI: 10.1109/SPAWC.2013.6612127 [extrait le 2013-09-25]

- SU HU ET AL: "Iterative channel estimation for short preamble based OFDM/OQAM system", COMMUNICATIONS, CIRCUITS AND SYSTEMS, 2009. ICCCAS 2009, 23 juillet 2009 (2009-07-23), pages 27-31, XP031528981, IEEE, PISCATAWAY, NJ, USA ISBN: 978-1-4244-4886-9

**Description**

## 1. Domaine de l'invention

Le domaine de l'invention est celui de la transmission d'informations numériques, notamment à haut débit, sur une bande de fréquences limitée.

Plus précisément, l'invention concerne une technique d'émission et de réception d'un signal à porteuses multiples permettant, en réception, une estimation du canal de transmission, par exemple en environnement radio mobile.

Notamment, la technique selon l'invention est bien adaptée à la transmission de signaux à porteuses multiples ayant subi une modulation de type OFDM/OQAM (pour « Orthogonal Frequency Division Multiplexing/Offset Quadrature Amplitude Modulation », en anglais) ou BFDM/OQAM (pour « Biorthogonal Frequency Division Mutiplexing/OQAM », en anglais), pour lesquelles les porteuses sont mises en forme par une fonction prototype.

L'invention peut notamment, mais non exclusivement, s'appliquer aux transmissions asynchrones d'informations numériques par un grand nombre d'équipements clients, par exemple de type capteurs à un équipement puits, de type station de base, dans un contexte de communication massive par des machines (pour « Massive Machine Communication » ou MMC, en anglais), par l'intermédiaire d'un réseau de communication mobile de 5ème génération.

## 2. Présentation de l'art antérieur

La modulation OFDM/OQAM est une alternative à la modulation OFDM classique. Elle se distingue de la modulation OFDM notamment par le fait qu'elle transmet des éléments de données à valeurs réelles, sans intervalle de garde. En revanche l'efficacité spectrale de l'OFDM/OQAM est identique à celle de l'OFDM classique sans intervalle de garde. En effet, en notant v0 l'espacement entre deux porteuses du multiplex et $\tau$0 l'espacement temporel entre deux symboles à valeurs réelles, on transmet pour un même espacement inter-porteuses v0 :

- En OFDM/OQAM, une valeur réelle par porteuses tous les intervalles de temps $\tau$0 ;
- En OFDM classique sans intervalle de garde, une valeur complexe (i. e. deux valeurs réelles) tous les 2x$\tau$0 = Tu.

Autrement dit, l'efficacité spectrale de l'OFDM/OQAM est (Tg+2$\tau$0) /2$\tau$0 fois supérieure à celle de l'OFDM classique avec un intervalle de garde de durée Tg.

Par ailleurs, bien que la modulation OFDM/OQAM soit généralement mise en œuvre selon un mode de communication synchrone, c'est-à-dire qu'un équipement émetteur transmet un signal modulé à un instant prédéfini connu de l'équipement récepteur, les inventeurs ont constaté que la modulation OFDM/OQAM était plus robuste à un mode de communication asynchrone que la modulation OFDM classique. Elle constitue donc une bonne candidate pour la transmission d'informations par des équipements capteurs à un équipement puits dans un contexte MMC.

Cependant, un inconvénient des techniques de modulation de type OFDM/OQAM est que la condition d'orthogonalité n'est réalisée que pour les valeurs réelles de symboles à transmettre, ce qui pose un problème d'estimation en réception, notamment d'estimation du canal de transmission, dans la mesure où les symboles reçus sont complexes. En environnement radio mobile, l'onde émise subit, lors de son parcours, de multiples réflexions, et le récepteur reçoit donc une somme de versions retardées du signal émis. Chacune de ces versions est atténuée et déphasée de façon aléatoire. Ce phénomène, connu sous le nom d'étalement des retards (« delay spread », en anglais), génère de l'interférence entre symboles (IES). On entend notamment par IES une interférence entre symboles temporels et/ou entre porteuses. Par exemple, dans un environnement de type urbain, l'étalement des retards est de l'ordre de ou inférieur à quelques microsecondes.

Le récepteur, par exemple un téléphone mobile, étant supposé en mouvement, l'effet dit Doppler agit également sur chaque trajet, ce qui se traduit par un décalage en fréquence du spectre reçu, proportionnel à la vitesse de déplacement du mobile.

Pour combattre ces différents phénomènes (dus à l'IES et à l'effet Doppler), on a envisagé dans les systèmes de type OFDM d'ajouter un intervalle de garde, pendant lequel on ne transmet pas d'informations utiles, de manière à garantir que toutes les informations reçues proviennent d'un même symbole. Dans le cas d'une démodulation cohérente des sous-porteuses, on corrige alors la distorsion apportée par le canal en estimant sa valeur en tout point du réseau temps/fréquence.

L'introduction d'un tel intervalle de garde permet ainsi de réduire les phénomènes liés à l'interférence entre symboles.

Toutefois, un inconvénient majeur de cette technique est qu'elle est d'efficacité spectrale réduite, aucune information utile n'étant transmise pendant la durée de l'intervalle de garde.

En revanche, les techniques de modulation de type OFDM/OQAM et BFDM/OQAM, ne nécessitent pas l'introduction d'un intervalle de garde ou un préfixe cyclique, tout en présentant la même efficacité spectrale qu'une modulation OFDM classique.

Les caractéristiques distinctes des modulations multi-porteuses de type réel d'une part, et de type complexe d'autre part, induisent des traitements différents lors de la mise en œuvre d'une estimation du canal de transmission. celle-ci étant rendue plus délicate.

En effet, pour des modulations de type réel, par exemple OFDM/OQAM ou BFDM/OQAM, le fait de disposer d'une orthogonalité des translatées au sens réel rend le processus d'estimation de canal plus délicat.

En particulier, pour estimer le gain complexe du canal sur une sous-porteuse donnée, il convient de réaliser la projection complexe du signal reçu sur la sous-porteuse considérée. Or, l'orthogonalité des translatées au sens réel et le fait que les fonctions prototypes, même choisies localisées au mieux en temps et en fréquence, sont de support infini sur au moins un des deux axes temporel ou fréquentiel, impliquent que, même sur un canal idéal, de l'interférence (intrinsèque) entre porteuses est générée.

Notamment, la partie imaginaire de la projection du signal reçu sur la base des translatées de la fonction prototype n'est pas nulle. Il apparaît alors un terme perturbateur qui vient s'ajouter au signal démodulé, et qu'il faut corriger avant de faire l'estimation du canal. Il est donc nécessaire de concevoir des méthodes permettant de compenser cette perte d'orthogonalité complexe, et palliant ainsi au moins certains inconvénients de cette technique de l'art antérieur pour les modulations de type OFDM/OQAM ou BFDM/OQAM.

Considérons par exemple $y(t)$ le signal reçu.

On suppose notamment que le choix des paramètres de la modulation multi-porteuses assure que le canal peut être considéré comme plat sur chacune des sous-porteuses pour chaque symbole OFDM/OQAM. Le canal est alors modélisable par un coefficient complexe par sous-porteuse, noté $H_{m,n}$, où $m$ est l'indice de la sous-porteuse et $n$ celui du symbole OFDM/OQAM.

On utilise alors la projection complexe du signal multi-porteuses au point $(m_0,n_0)$ de l'espace temps/fréquence pour estimer le canal de transmission $\hat{H}m_0,n_0$ à cet emplacement.

Ainsi, si on émet $a_{m_0,n_0} = \sqrt{E}$ à cet emplacement, on a :

$$H_{m_0,n_0} = \frac{\widetilde{\int y(t)g^*_{m,n}(t)dt}}{\sqrt{E}} \quad (1)$$

Avec g fonction prototype utilisée par le modulateur
En supposant que le canal est idéal, ($y(t) = s(t)$), on devrait donc avoir
$\hat{H}m_0,n_0 = 1$.

Or, considérant $a^{(c)}_{m_0,n_0} = \left\langle s,g_{m_0,n_0} \right\rangle_C = \int s(t)g^*_{m_0,n_0}(t)dt$ ,
on a :

$$a^{(c)}_{m,n} = \sqrt{E} + \sum_{(m,n)\neq(m0,n0)} a_{m,n} \int g_{m,n}(t)g^*_{m0,n0}(t)dt = \sqrt{E} + I_{m0,n0} \quad (2)$$

avec $Im_0,n_0 \in jR$
où $\langle .,.\rangle_C$ désigne le produit scalaire en complexe.

L'équation (2) traduit le fait que la projection complexe du signal parfaitement transmis est néanmoins entachée d'une interférence entre symboles (IES) intrinsèque aux modulations OFDM/OQAM ou BFDM/OQAM, notée $I_{m0,n0}$.

En particulier, l'existence de cette interférence entre symboles perturbe fortement l'estimation du canal de transmission, et, par conséquent, l'estimation des symboles.

On connait de l'article de Lélé et al, intitulé « 2 dB better than CP-OFDM with OFDM/OQAM for preamble-based channel estimation », publié dans les Proceedings de la conférence ICC (International Conférence on Communications), qui s'est tenue en mai 2008, une technique d'émission et de réception d'un signal à porteuses multiples de type OFDM/OQAM, appelée IAM-I (pour « Interference Approximation Method - Imaginary», en anglais) permettant, en réception une estimation du canal de réception.

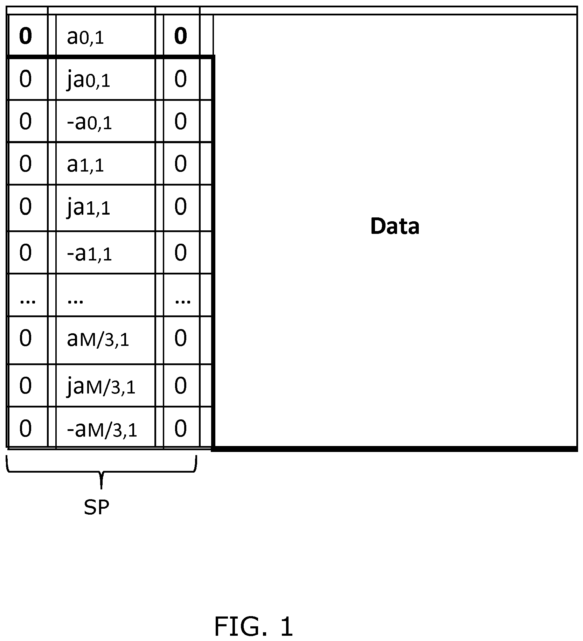

En relation avec la Figure **1,** on insère côté émission dans le signal multi-porteuses un préambule SP formé d'au moins trois symboles consécutifs constitués de pilotes. Le symbole central SP2 comprend une séquence de un ou plusieurs groupes de pilotes, au moins un des groupes comprenant un premier pilote à valeur réelle de signe, au moins un deuxième pilote à valeur imaginaire pure de signe opposé à celui du premier pilote et un troisième pilote à valeur réelle de signe opposé à celui du premier pilote. Le premier symbole SP1 et le troisième symbole SP3 sont formés de valeurs nulles. Cette distribution de pilotes par triplet permet notamment d'estimer le canal de transmission en profitant des interférences inter-symboles générées pour diminuer le bruit.

En effet, si on considère un triplet de pilotes $\{a_{m0-1,n0}, a_{m0,n0}, a_{m0+1,n0}\}$ avec $m_0$ entier non nul et inférieur à M-1, nombre de porteuses allouées à l'équipement client et $n_0$ entier. Selon la technique IAM-I, le triplet prend les valeurs suivantes :

$$\left. \begin{array}{l} a_{m0-1,n0} = -1 \; ou \; 1 \\ a_{m0,n0} = j.\,a_{m0-1,n0} \\ a_{m0+1,n0} = -a_{m0-1,n0} \end{array} \right\} \; (3)$$

Après passage dans le canal de transmission, pour le pilote $a_{m_0,n_0}$ émis sur la porteuse $m_0$ à l'instant $n_0$, un signal complexe $y_{m0,n0}$ est reçu par l'équipement récepteur à l'emplacement $m_0,n_0$, que l'on peut exprimer de la façon suivante :

$$Y_{m0,n0} = H_{m0,n0}.\,(a_{m0,n0} + I) + b \; (4)$$

Avec $H_{m0,n0}$ coefficient représentatif du canal de transmission $I_{m0,n0}$ l'interférence créée à cet emplacement, b la composante de bruit.

$$Y_{m0,n0} = H.\,(j a_{m0-1,n0} + I) + b$$

La réponse fréquentielle $\hat{H}_{m0,n0}$ du canal de transission s'exprime alors comme suit :

$$\hat{H}_{m0,n0} = \frac{Y}{j a_{m0,n0}+I} = H_{m0,n0} + \frac{b}{j a_{m0,n0}+I_{m0,n0}} \; (5)$$

En supposant le canal de transmission constant, la composante d'interférence peut s'exprimer comme suit :

$$I_{m0,n0} = \sum_{m,n \neq m_0,n_0} a_{m,n} \int g_{m,n}(t) g^*_{m,n}(t) dt \; (6)$$

Avec m,n = $m_0+1,n_0$ ; $m_0-1,n_0$ ce qui correspond aux positions des symboles voisins non nuls et donc susceptibles de créer une interférence à l'emplacement $m_0,n_0$, et g fonction prototype mise en œuvre par la technique de modulation OQAM.

L'expression précédente se simplifie en :

$$I_{m0,n0} = \left( a_{m0+1,n0.}\beta - a_{m0-1,n0.}\beta \right).j$$

$$I_{m0,n0} = 2 a_{m0-1,n0.}\beta.j \; (7)$$

Avec $\beta$ constante dont la valeur dépend du prototype g mis en œuvre par la modulation OQAM.

On évalue maintenant le dénominateur du terme $\dfrac{b}{j a_{m0,n0}+I}$ de l'équation (4)

$$j.\,a_{m0-1,n0} + I_{m0,n0} = j.\,a_{m0-1,n0}.\,(1 + 2.\beta)$$

On obtient donc :

$$\left| j.\, a_{m0-1,n0} + I_{m0,n0} \right|^2 = \left| 1 + 2\beta \right|^2 > 1$$

La valeur absolue du dénominateur de ce terme étant supérieure à 1, la composante de bruit b est donc réduite par les interférences générées entre les pilotes du triplet.

Un premier inconvénient de cette technique est qu'elle produit un signal multi-porteuses ayant une valeur de PAPR (pour « Peak To Average Power Ratio », en anglais) élevée.

Ceci est dû notamment à la périodicité de la séquence de pilotes insérée dans le signal multi-porteuses. Du fait de cette périodicité, les valeurs absolues des pilotes de la séquence se cumulent en entrée de la transformée en fréquences mise en œuvre à l'émission.

Or dans un contexte MMC, les équipements clients sont généralement des capteurs soumis à des contraintes énergétiques importantes. La gestion d'une valeur de PAPR élevée entraîne une consommation énergétique accrue au niveau de l'équipement émetteur, qui est incompatible avec de telles contraintes.

Un deuxième inconvénient de la technique IAM-I est qu'elle n'est pas adaptée à un contexte de réception multi-utilisateurs lorsque l'équipement récepteur a alloué à au moins deux équipements clients le même ensemble de porteuses, car les séquences de pilotes émises par les équipements clients ne sont pas spécifiques à chaque client et les signaux transmis par chacun d'entre eux ne sont par conséquent pas dissociables.

On connaît de l'article de Du et al, intitulé « Novel Preamble-Based Channel Estimation for OFDM/OQAM Systems », publié dans les Proceedings de la conférence internationale IEEE sur les Communications, le 14 juin 2009, page 1-6, le fait d'émettre dans un signal multi-porteuses une séquence de pilotes comprenant une séquence de valeurs complexes suivie d'une séquence de valeurs nulles. La séquence de complexes utilisée est déterminée de telle sorte que les interférences générées se compensent par groupe de porteuses consécutives émises sur le même temps symbole.

On connaît de l'article de Fusco et al, intitulé « Joint Symbol timing and CFO estimation in multiuser OFDM/OQAM systems », publié dans la revue « Signal Processing Advances in Wireless Communications », le 21 juin 2009, le fait d'insérer dans un signal multi-porteuses une séquence de pilotes propre à chaque utilisateur à des fins de synchronisation. La séquence correspond à un préambule classiquement utilisé en OQAM, tel que la partie réelle d'un pilote est émise à un temps TS tandis que sa partie imaginaire est émise au temps TS + $\tau 0/2$.

On connaît de l'article de Hu et al, intitulé « Preamble Design with ICI Cancellation for Channel Estimation in OFDM/OQAM System », publié dans la revue « IEICE Transactions on Communications», en janvier 2010, le fait d'insérer dans un signal multi-porteuses une séquence de valeurs réelles non nulles, d'amplitude et de signe déterminés (+1 ou -1), en alternance avec des valeurs nulles sur des porteurs impairs respectivement paires.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui permette à un équipement récepteur d'estimer le canal de transmission à partir d'un signal multi-porteuses reçu, le signal ayant été émis par un équipement émetteur soumis à des contraintes de consommation énergétiques, dans un environnement massivement multi-utilisateurs.

Un autre objectif de l'invention est de proposer une solution d'estimation de canal qui soit en outre adaptée à un mode de communication asynchrone.

### 5. Exposé de l'invention

Un autre objectif de l'invention est de proposer une solution d'estimation de canal qui soit en outre adaptée à un mode de communication asynchrone.

### 5. Exposé de l'invention

Ces objectifs, ainsi que d'autres qui apparaîtront par la suite, sont atteints à l'aide d'un Procédé d'émission d'un signal multi-porteuses mettant en œuvre une modulation de type OQAM, destiné à être transmis via un canal de transmission, formé d'une succession temporelle de symboles constitués d'un ensemble d'éléments de données comprenant :

- Des éléments de données informatifs à valeurs réelles, et

- Pour au moins certains desdits symboles, des éléments de données de référence, appelés pilotes, connus d'au moins un récepteur destiné à effectuer une réception du signal multi-porteuses,

Chacun desdits éléments de données modulant une fréquence porteuse dudit signal, une fréquence porteuse modulée par un desdits éléments de données étant appelée porteuse,

Un ensemble de porteuses étant alloué à un équipement émetteur.

Selon l'invention, ledit procédé d'émission comprend une étape d'insertion d'une séquence de pilotes propre audit équipement émetteur à instant donné dans le signal multi-porteuses sur ledit ensemble de porteuses alloué, ladite séquence de pilotes comprenant :

- une séquence de valeurs complexes non nulles, insérées sur les porteuses impaires ou paires, en alternance avec des valeurs nulles, insérées sur les autres porteuses respectivement paires ou impaires,

- les valeurs complexes non nulles de la séquence de pilotes, leurs transformées en fréquence et transformées en fréquence inverse étant à enveloppe constante,

- et une séquence de valeurs nulles modulant les porteuses de l'ensemble de porteuses alloué à l'instant suivant.

Avec l'invention, la séquence de pilotes forme un préambule, comprenant une alternance de valeurs complexes non nulles et de valeurs nulles insérées à un instant donné de l'espace temps-fréquence sur l'ensemble des porteuses allouées à l'équipement émetteur et, à l'instant suivant des valeurs nulles sur l'ensemble des porteuses allouées.

La transmission de pilotes bénéficie donc d'un voisinage temps-fréquence qui crée peu d'interférences inter symboles, ce qui garantit à un équipement récepteur de bénéficier de conditions favorables pour estimer le canal de transmission.

La durée du préambule est d'un temps symbole.

Ainsi, l'invention repose sur une approche tout à fait nouvelle et inventive de la transmission de pilotes dans un signal multi-porteuses pour l'estimation d'un canal de transmission, qui consiste à limiter le niveau des interférences inter symboles générées.

Contrairement à l'art antérieur qui insère des groupes d'au moins trois pilotes comprenant au moins une pilote ayant une valeur réelle et un pilote ayant une valeur imaginaire pure de signe opposé et un pilote ayant une valeur réelle de signe opposé au premier pilote, l'invention insère une alternance de valeurs complexes non nulles avec des valeurs nulles sur les porteuses paires et impaires d'un même temps symbole.

Les valeurs complexes non nulles de la séquence de pilotes selon l'invention sont en outre choisies de façon à ce que le signal modulé produit soit à enveloppe constante, de même que toute transformée temps-fréquence de ce signal et que toute transformée inverse de cette transformée temps-fréquence. Cette propriété permet de garantir une valeur réduite de PAPR et donc des contraintes raisonnables sur les caractéristiques techniques, la consommation énergétique et le coût d'un module RF (pour « radio frequency », en anglais) de l'équipement émetteur.

Enfin, la séquence de pilotes est spécifique à chaque équipement émetteur, afin de permettre à un équipement récepteur d'identifier l'équipement émetteur, lorsqu'il émet dans la même bande de fréquences qu'un autre équipement émetteur.

L'invention permet donc de résoudre le problème technique de l'estimation du canal de transmission dans un contexte de communication massivement multi utilisateurs dans lequel les équipements émetteurs sont soumis à des contraintes de consommation d'énergie.

L'invention tire ainsi parti des avantages de la modulation OFDM-OQAM en ce qui concerne sa résilience à l'asynchronisme et la rend exploitable dans un contexte de communication multi-utilisateurs.

Selon une caractéristique avantageuse de l'invention, la séquence de valeurs complexes non nulles de la séquence de pilotes est une séquence de type CAZAC de longueur égale à la moitié du nombre de porteuses alloué à l'équipement émetteur.

Les séquences de types CAZAC possèdent toutes les propriétés énoncées dans la revendication précédente et nécessaires à l'invention, notamment en terme d'enveloppe constante. Un avantage d'une telle séquence est qu'elle présente en outre une autocorrélation nulle, ce qui permet côté réception une meilleure détection des pics et facilite l'estimation de canal.

Selon un autre aspect de l'invention, la séquence de valeurs complexes non nulles de la séquence de pilotes est une séquence de type Zadoff-Chu, définie par l'expression suivante :

$$ZC(l) = e^{\frac{j\pi q l(l+1)}{N_{ZC}}}$$

Avec l, indice de la valeur complexe dans la séquence, q entier correspondant à une séquence racine propre à l'équipement client et $N_{ZC}$ égal au plus grand nombre premier inférieur à la longueur de la séquence.

Les séquences de type Zadoff-Chu sont connues de l'homme de métier et décrites en détail dans le document intitulé « Polyphasé Codes with good periodic correlation properties » publié par Chu et al dans la revue IEEE Transactions on information theory, pp. 531-532, en 1972. Leur utilisation pour l'estimation de canal est spécifiée dans la norme TS 36.211 V9.1.0 publiée par 3GPP LTE (pour « Long Term Evolution », en anglais), en mars 2010, dans le cas de signaux mettant en œuvre une modulation de type OFDM classique.

Du fait de leur nature complexe, de telles séquences n'ont jusqu'à maintenant jamais été considérées comme exploitables pour l'estimation de canal pour des signaux mettant en œuvre une modulation de type OFDM-OQAM.

Selon un autre aspect de l'invention, la séquence de valeurs complexes non nulles de la séquence de pilotes est une séquence de type Björck, définie par l'expression suivante :

$$BS(l) = \frac{1}{\sqrt{L}}.a, \text{ avec } a = \begin{cases} 1 \; pour \; l = 0 \\ e^{j\left(\cos\left(1/_{1+\sqrt{L}}\right)\right) pour \; l=u^2 \, mod \, L \; et \; u=1,...,L-1} \\ e^{-j\left(\cos\left(1/_{1+\sqrt{L}}\right)\right) sinon} \end{cases}$$

avec l, entier compris entre 0 et L-1n avec L longueur de la séquence.

Les séquences « Björck » constituent un autre type de séquence CAZAC, qui possèdent les propriétés nécessaires à la mise en œuvre de l'invention. Elles sont connues de l'homme de métier et par exemple décrites en détail dans le document intitulé « Finite Frame : Theory and applications », par Gasazza, publié par l'éditeur Springer, en 2010, page 229.

Selon un autre aspect de l'invention, les valeurs complexes non nulles de la séquence de pilotes sont multipliées par un facteur de rotation de phase.

Ce facteur de rotation de phase permet à un équipement récepteur d'estimer le canal de communication propre à chaque équipement client dans un contexte multi-utilisateurs, par exemple MU-MIMO (pour « Multi Users- Multi Input Multi Output », en anglais) lorsque plusieurs équipements clients émettent sur la même bande de fréquences à destination d'un équipement client comprenant plusieurs antennes de réception.

Selon un autre aspect de l'invention, la séquence de pilotes est insérée dans le signal multi-porteuses à un instant non nul et comprend en outre une séquence de valeurs nulles modulant les porteuses de l'ensemble de porteuses alloué à l'instant précédent.

Un avantage est de garantir de façon simple qu'une quantité négligeable d'interférences est générée à cause d'éventuels éléments de données transmis à l'instant précédent celui du préambule.

Selon un autre aspect de l'invention, la séquence de pilotes est insérée dans le signal multi-porteuses à un instant non nul, les éléments de données informatifs insérés à un instant précédent modulant les porteuses de l'ensemble des porteuse allouées selon une modulation de type cyclic-OQAM.

« Multi-carrier modulation analysis and WCP-COQAM proposai », par Lin et al, dans la revue EURASIP Journal on Advances in Signal Processing en mai 2014.

Un avantage de cette solution est qu'elle n'augmente pas la durée d'émission du préambule, qui reste égal à un temps symbole.

Le procédé qui vient d'être décrit dans ses différents modes de réalisation est avantageusement mis en œuvre par un dispositif d'émission selon l'invention.

Avantageusement, un tel dispositif peut être intégré à un équipement émetteur. L'invention concerne donc un équipement émetteur, apte à émettre un signal multi-porteuses mettant en œuvre une modulation de type OQAM, comprenant un dispositif d'émission selon l'invention.

Corrélativement, l'invention concerne aussi un procédé de réception d'un signal multi-porteuses correspondant à au moins un signal multi-porteuses mettant en œuvre une modulation de type OQAM, émis par au moins un équipement émetteur via un canal de transmission,

ledit signal étant formé d'une succession temporelle de symboles constitués d'un ensemble d'éléments de données comprenant :

- Des éléments de données informatifs à valeurs réelles, et

- Pour au moins certains desdits symboles, des éléments de données de référence, appelés pilotes, connus d'au moins un récepteur destiné à effectuer une réception du signal multi-porteuses,

Chacun desdits éléments de données modulant une fréquence porteuse dudit signal, une fréquence porteuse modulée

**EP 3 202 077 B1**

par un desdits éléments de données étant appelée porteuse,

Un ensemble de porteuses étant alloué audit équipement émetteur.

Selon l'invention, une séquence de pilotes propre audit équipement émetteur a été insérée dans le signal multi-porteuses sur ledit ensemble de porteuses alloué, ladite séquence de pilotes comprenant :

- Une séquence de valeurs complexes non nulles, insérées sur les porteuses paires ou impaires, en alternance avec des valeurs nulles, insérées sur les autres porteuses, à un instant donné,

Selon l'invention, une séquence de pilotes propre audit équipement émetteur a été insérée dans le signal multi-porteuses sur ledit ensemble de porteuses alloué, ladite séquence de pilotes comprenant :

- Une séquence de valeurs complexes non nulles, insérées sur les porteuses paires ou impaires, en alternance avec des valeurs nulles, insérées sur les autres porteuses, à un instant donné,

- les valeurs complexes non nulles de la séquence de pilotes, leurs transformées en fréquence et transformées en fréquence inverse étant à enveloppe constante, et

- une séquence de valeurs nulles modulant les porteuses de l'ensemble de porteuses alloué insérée à l'instant suivant,

et le procédé de réception comprend :

- Une étape d'extraction de valeurs complexes correspondant aux valeurs non nulles de la séquence de pilotes sur les porteuses impaires ou paires, après passage dans le canal de transmission,

- Une étape d'estimation d'une réponse fréquentielle dudit canal de transmission sur les porteuses impaires ou paires à partir des valeurs complexes extraites, et

- Une étape d'estimation d'une réponse fréquentielle du canal de transmission sur les autres porteuses, respectivement paires ou impaires par interpolation fréquentielle de la réponse du canal estimées sur les porteuses impaires ou paires.

Selon un aspect de l'invention, l'ensemble de porteuses ayant été alloué à au moins un deuxième équipement émetteur, ledit procédé comprend en outre une étape de transformation temps-fréquence inverse destinée à séparer sur les porteuses de l'ensemble de porteuses alloué les composantes issues d'un premier signal multi-porteuses émis par le premier équipement émetteur de celles issues d'au moins un deuxième signal multi-porteuses émis par au moins un deuxième équipement client.

De cette manière, les réponses du canal de communication propres à chaque équipement émetteur peuvent être estimées, dans un contexte multi-utilisateurs.

Le procédé qui vient d'être décrit dans ses différents modes de réalisation est avantageusement mis en œuvre par un dispositif de réception selon l'invention.

Avantageusement, un tel dispositif peut être intégré à un équipement récepteur, par exemple une station de base ou un point d'accès. L'invention concerne donc un équipement récepteur, apte à recevoir un signal correspondant à au moins un signal multi-porteuses mettant en œuvre une modulation de type OQAM émis par au moins un équipement émetteur, comprenant un dispositif d'émission selon l'invention.

L'invention concerne aussi un signal de données portant un signal multi-porteuses mettant en œuvre une modulation de type OQAM, formé d'une succession temporelle de symboles constitués d'un ensemble de données comprenant :

- Des éléments de données informatifs à valeurs réelles, et

- Pour au moins certains desdits symboles, des éléments de données de référence, appelés pilotes, connus d'au moins un équipement récepteur destiné à effectuer une réception du signal multi-porteuses,

Chacun desdits éléments de données modulant une fréquence porteuse dudit signal, une fréquence porteuse modulée par un desdits éléments de données étant appelée porteuse,

Un ensemble de porteuses étant alloué audit équipement émetteur.

Selon l'invention, ledit signal multi-porteuses comprend une séquence de pilotes propre audit équipement émetteur insérée à un instant donné sur ledit ensemble de porteuses alloué et ladite séquence de pilotes comprend :

**9**

- des valeurs complexes non nulles, insérées sur les porteuses impaires ou paires, en alternance avec des valeurs nulles, insérées sur les autres porteuses, respectivement paires ou impaires,

- Les valeurs complexes non nulles de la séquence de pilotes, leurs transformées en fréquence et transformées en fréquence inverse étant à enveloppe constante, et

- une séquence de valeurs nulles modulant les porteuses de l'ensemble de porteuses alloué à l'instant suivant.

L'invention concerne encore un programme d'ordinateur comportant des instructions pour la mise en œuvre des étapes d'un procédé d'émission d'un signal multi-porteuses tel que décrit précédemment, lorsque ce programme est exécuté par un processeur.

L'invention concerne aussi un programme d'ordinateur comportant des instructions pour la mise en œuvre des étapes d'un procédé de réception d'un signal multi-porteuses tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif d'émission d'un signal multi-porteuses et au dispositif de réception d'un signal multi-porteuses selon l'invention, éventuellement amovible, mémorisant respectivement un programme d'ordinateur mettant en œuvre un procédé d'émission et un programme d'ordinateur mettant en œuvre un procédé de réception, tels que décrits précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** (déjà décrite) présente un exemple de séquence pilote insérée dans un signal multi-porteuses mettant en œuvre une modulation de type OFDM/OQAM, selon l'art antérieur ;

- la figure **2** présente de façon schématique un système de communication entre une pluralité d'équipements émetteurs et un équipement récepteur selon l'invention ;

- la figure **3** présente de façon schématique un exemple de structure simplifiée de dispositifs d'émission et de de réception d'un signal multi-porteuses mettant en œuvre une modulation de type OQAM selon l'invention ;

- la figure **4** présente de façon schématique les étapes d'un procédé d'émission d'un signal multi-porteuses mettant en œuvre une modulation de type OQAM selon l'invention ;

- la figure **5** présente de façon schématique les étapes d'un procédé de réception d'un signal multi-porteuses mettant en œuvre une modulation de type OQAM selon l'invention ;

- la figure **6** présente un exemple de structure d'un préambule selon un premier mode de réalisation de l'invention ;

- la figure **7** présente un exemple de structure d'un préambule selon un deuxième mode de réalisation de l'invention ;

- la figure **8** détaille l'étape d'estimation de canal du procédé de réception selon un premier exemple de réalisation de l'invention ;

- la figure **9** détaille l'étape d'estimation de canal du procédé de réception selon un deuxième exemple de réalisation de l'invention ;

- les figures **10, 11, 12a** et **12b** présentent des résultats obtenus par le procédé de réception d'un signal multi-porteuses selon l'invention, lorsque deux équipements émetteurs transmettent simultanément des données à un même équipement récepteur sur des bandes de fréquences séparées ; et

- les figures **13a** et **13b** présentent des résultats obtenus par le procédé de réception d'un signal multi-porteuses selon l'invention, lorsque deux équipements émetteurs transmettent simultanément des données à un même équipement récepteur sur la même bande de fréquences.

**7. Description d'un mode de réalisation particulier de l'invention**

Le principe général de l'invention repose sur l'insertion par un équipement émetteur dans un signal multi-porteuses modulé selon une modulation de type OFDM/OQAM d'une séquence de pilotes à un instant donné TS, connue de l'équipement récepteur, ladite séquence de pilotes comprenant une alternance de valeurs complexes modulant les porteuses impaires (ou paires) et de valeurs nulles portées par les porteuses paires (ou impaires) de l'ensemble de porteuses alloué à l'équipement émetteur ou inversement, et sur l'insertion d'une séquence de valeurs nulles modulant les porteuses de l'ensemble de porteuses alloué à l'instant suivant (TS+$\tau$0).

Selon l'invention la sous-séquence de valeurs complexes non nulles possède des propriétés particulières d'enveloppe constante.

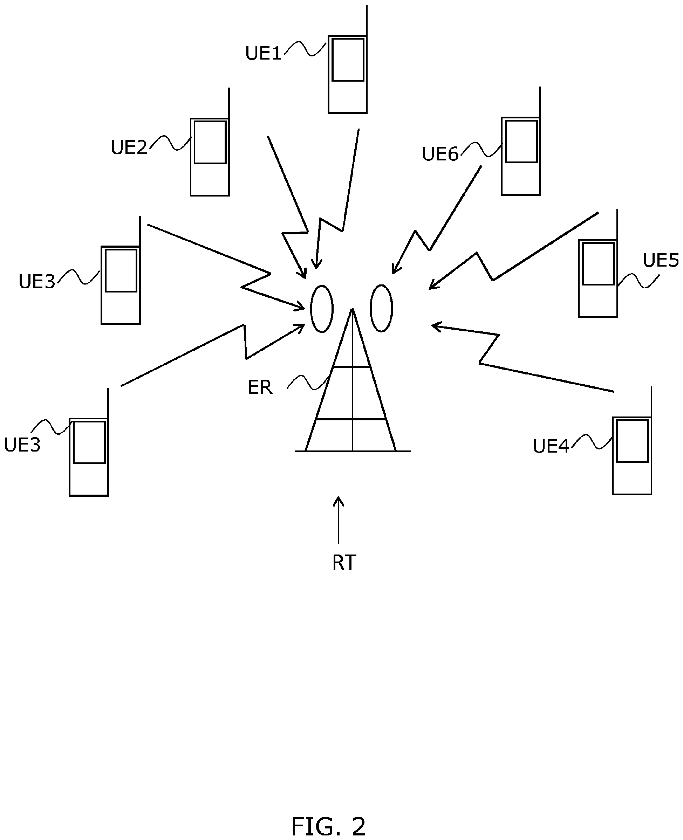

En relation avec la Figure **2,** on considère une pluralité d'équipements émetteurs UE1, UE2...UEN, avec N entier non nul, aptes à communiquer par voie radio selon une modulation de type OFDM/OQAM avec un même équipement récepteur ER. Les équipements émetteurs sont par exemple des capteurs agencés pour collecter des données de mesure, par exemple environnementales ou de consommation, et les remonter à l'équipement récepteur ER, appelé équipement collecteur ou équipement puits, agencé pour traiter ces données. Dans ce cas les équipements émetteurs sont soumis à des contraintes énergétiques importantes.

Dans la suite de la description, on se place en particulier dans un contexte de communication massive entre machines ou MMC déjà évoqué et à l'étude dans le cadre des travaux de normalisation de la 5$^{ème}$ génération de réseaux mobiles par le 3GPP.

Bien sûr, l'invention n'est pas limitée à cette application et concerne aussi bien des communications entre des équipements émetteurs de type téléphone intelligent (pour « smartphone », en anglais), tablette etc, avec un équipement de réception radio mobile tel qu'une station de base (pour «base station », en anglais) ou e-nodeB selon la terminologie LTE (pour « Long Term Evolution ») spécifiée par l'organisme de standardisation 3GPP (pour « 3rd Génération Partnership Project », en anglais) par l'intermédiaire d'un réseau mobile de 3$^{ème}$ ou de 4$^{ème}$ génération. L'équipement récepteur peut aussi être un point d'accès, par exemple pour un réseau sans fil de type Wifi, spécifié par la norme IEEE 802.11x.

Dans le contexte MMC, les équipements émetteurs ne sont pas synchronisés avec l'équipement récepteur, ce qui fait qu'ils peuvent décider d'émettre un signal modulé selon une modulation OFDM/OQAM à tout instant.

On notera que l'invention qui va être décrite plus en détails, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

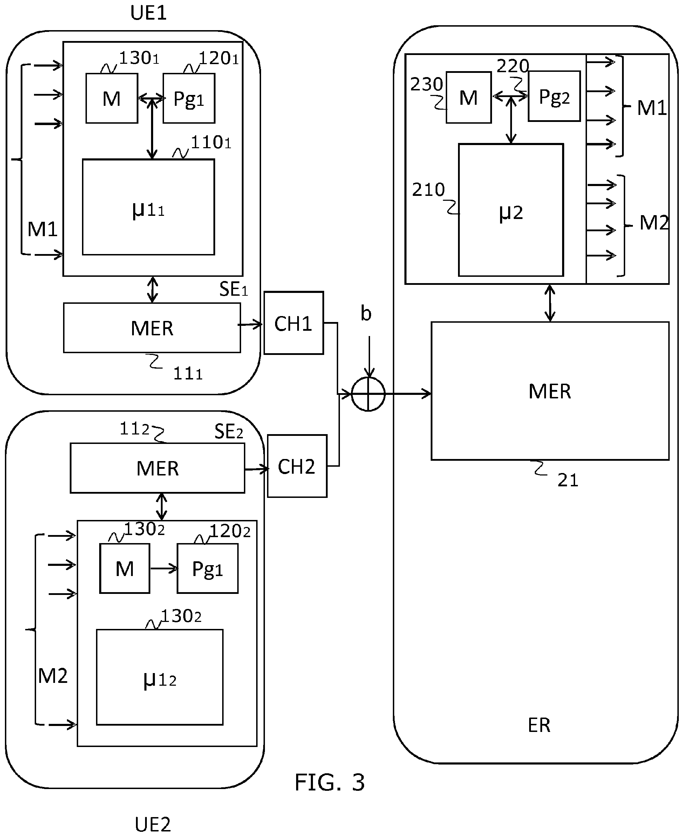

En relation avec la Figure **3,** on considère en particulier deux équipements émetteurs UE1 et UE2 ayant des éléments de données informatifs à transmettre à un même équipement de réception ER. L'équipement récepteur ER a par exemple alloué au premier équipement émetteur UE1 un premier ensemble de M1 porteuses et au deuxième équipement émetteur un deuxième ensemble de M2 porteuses, les deux ensembles pouvant être disjoints (comme représenté) ou non.

Les équipements émetteurs UE1 et UE2 comprennent respectivement un dispositif $100_1$, $100_2$ d'émission d'un signal multi porteuses selon l'invention.

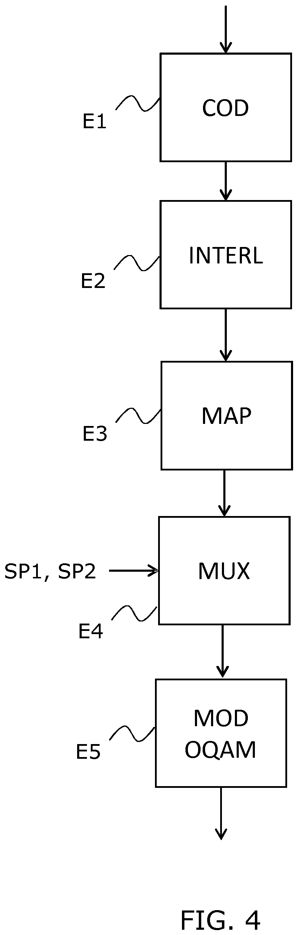

Les dispositifs $100_1$, $100_2$ mettent en œuvre le procédé d'émission d'un signal multi- porteuses selon l'invention qui sera décrit plus en détails en relation avec la Figure **4.**

Par exemple, les dispositifs $100_1$, $100_2$ comprennent respectivement une unité de traitement $110_1$,$110_2$, équipée d'un processeur $\mu1_1$,$\mu1_2$, et pilotée par un programme d'ordinateur Pg1 $120_1$, stocké dans une mémoire $130_1$, 1302 et mettant en œuvre le procédé de selon l'invention.

A l'initialisation, les instructions de code des programmes d'ordinateur Pg$_1$ $120_1$, Pg$_2$ 1202 sont par exemple chargées dans une mémoire RAM avant d'être exécutées respectivement par les processeurs des unités de traitement $110_1$,$110_2$. Le processeur de l'unité de traitement $110_1$, $110_2$ met en œuvre les étapes du procédé décrit précédemment, selon les instructions des programmes d'ordinateur $120_1$, $120_2$.

Les dispositifs $100_1$, $100_2$ sont agencés pour coopérer au moins avec un module MER $11_1$, $11_2$ d'émission/réception de données des équipements émetteurs UE1, UE2, par l'intermédiaire desquels les signaux multi-porteuses SE1, SE2 sont transmis dans un réseau de télécommunications RT, par exemple un réseau radio mobile de 4$^{ème}$ génération, 5$^{ème}$ génération ou de génération suivante.

Selon une variante de l'invention, un dispositif $100_1$, $100_2$ est intégré au module d'émission/réception $11_1$, $11_2$.

L'équipement récepteur ER comprend un dispositif 200 de réception d'un signal multi-porteuses selon l'invention.

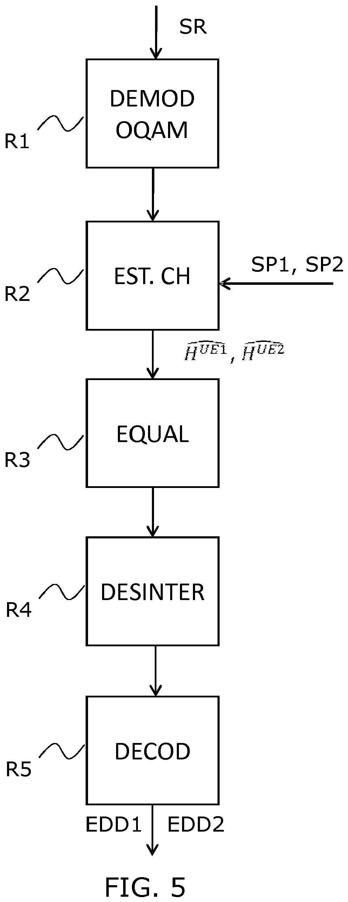

Le dispositif 200 met en œuvre le procédé de réception d'un signal multi-porteuses selon l'invention qui sera décrit en détails en relation avec la Figure **5.**

Par exemple, le dispositif 200 comprend une unité de traitement 210, équipée d'un processeur μ2, et pilotée par un programme d'ordinateur Pg2 220, stocké dans une mémoire 230 et mettant en œuvre le procédé de selon l'invention.

A l'initialisation, les instructions de code du programme d'ordinateur Pg$_1$ 220 sont par exemple chargées dans une mémoire RAM avant d'être exécutées par le processeur de l'unité de traitement 210. Le processeur de l'unité de traitement 210 met en œuvre les étapes du procédé décrit précédemment, selon les instructions du programme d'ordinateur 220.

Le dispositif 200 est agencé pour coopérer au moins avec le module suivant du MER 21 d'émission/réception de données de l'équipement de réception ER, par l'intermédiaire duquel le signal multi-porteuses est reçu du réseau de télécommunications RT, par exemple un réseau radio mobile de 4ème génération, 5ème génération ou de génération suivante.

Selon une variante de l'invention, le dispositif 200 est intégré au module d'émission/réception 21.

En relation avec la Figure **4,** on présente maintenant les étapes d'un procédé d'émission d'un signal multi porteuses mis en œuvre par un équipement émetteur UEi, i= 1 ou 2, selon un exemple de réalisation de l'invention. On suppose que l'équipement émetteur UEi dispose d'un ensemble de Mi porteuses qui lui a été alloué par l'équipement de réception ER.

En E1, les éléments de données informatifs à transmettre sont codés selon une technique de codage de canal, mettant par exemple en œuvre des turbocodes.

En E2, les éléments de données codés sont entrelacés.

En E3, les éléments de données codés entrelacés subissent un codage binaire à symboles suivant une constellation, par exemple de type Q-PSK, 16-QAM. Une séquence de symboles est obtenue.

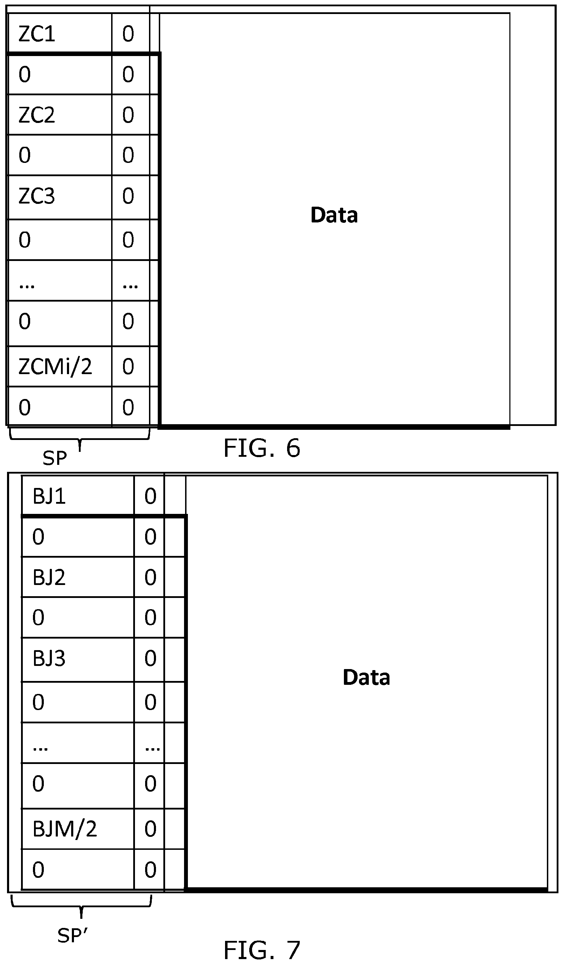

En E4, une séquence de pilotes SPi est insérée par multiplexage à la séquence de symboles complexes sur l'ensemble de Mi porteuses. Selon l'invention, cette séquence comprend une séquence SCi de valeurs complexes non nulles, de longueur égale à la moitié du nombre de porteuses allouées à l'équipement émetteur UEi. Une telle séquence est spécifique à l'équipement UEi et présente des propriétés particulières d'enveloppe constante. Dans la suite de la description, deux exemples de séquences complexes SC seront détaillés en relation avec les Figures **6** et **7.**

En E5, la séquence multiplexée est modulée selon une modulation de type OFDM /OQAM et le signal multi-porteuses obtenu est transmis dans le canal de transmission CHi entre l'équipement émetteur UEi et l'équipement récepteur ER.

En relation avec la Figure **5,** on présente maintenant les étapes d'un procédé de réception d'un signal multi-porteuses SR par l'équipement récepteur ER selon l'invention.

Le signal reçu SR est d'abord démodulé au cours d'une étape R1.

L'équipement récepteur ER met ensuite en œuvre une estimation R2 de la réponse du canal ou des canaux de communication CHi empruntés par le signal SR reçu. En effet, si plusieurs équipements émetteurs UEi ont chacun transmis sur une même période temporelle un signal multi-porteuses à l'équipement récepteur ER, chaque signal SEi émis a emprunté, avant d'atteindre l'équipement récepteur ER, un canal de communication CHi différent, qu'il convient d'estimer.

Cette étape est réalisée à l'aide des séquences de pilotes SPi propres à chaque équipement émetteur UEi, qui sont connues au préalable de l'équipement récepteur ER.

En R3, la composante du signal démodulé correspondant à chaque signal émis SE1, SE2, est ensuite égalisée à l'aide de la réponse du canal de transmission CH1, CH2 estimée en R2, puis désentrelacée en R4, et enfin décodée en R5 pour obtenir les éléments de données informatifs décodés UDD1, UDD2 transmis par chacun des équipements émetteurs UE1, UE2.

En relation avec la Figure **6,** on présente maintenant un premier exemple de séquence de pilotes SP insérée par un équipement émetteur UEi dans un signal multi-porteuses destiné à l'équipement récepteur ER selon l'invention.

Cette séquence SP comprend une sous-séquence de valeurs complexes non nulles de type Zadoff Chu.

Une séquence de type Zadoff-Chu s'exprime de la façon suivante :

$$ZC(l) = e^{\frac{j\pi ql(l+1)}{N_{ZC}}} \quad (8)$$

l est un entier compris entre 1 et L, L étant égal à la moitié du nombre de porteuses allouées à l'équipement émetteur UEi.

q est une séquence racine propre à l'équipement client UEi, $N_{ZC}$ est le plus grand nombre premier inférieur à la moitié du nombre de porteuses Mi alloué à l'équipement client UEi, n entier compris entre 1 et Mi/2.

Une séquence de type Zadoff-Chu est connue de l'homme de métier comme appartenant à la famille des séquences CAZAC. Elle en possède donc les propriétés particulières, notamment en ce qui concerne l'enveloppe constante.

En relation avec la Figure **7,** on présente maintenant un deuxième exemple de séquence de pilotes SP' insérée par un équipement émetteur UEi dans un signal multi-porteuses destiné à l'équipement récepteur ER selon l'invention.

Cette séquence comprend une sous-séquence de valeurs complexes non nulles de type Björck.

Une séquence de type Björck s'exprime de la façon suivante :

$$BS(l) = \frac{1}{\sqrt{L}}.a, \text{ avec } a = \begin{cases} 1 \; pour \; l = 0 \\ e^{j\left(\cos\left(1/1+\sqrt{L}\right)\right) pour \; l=u^2 \, mod \, L \, et \, u=1,...,L-1} \\ e^{-j\left(\cos\left(1/1+\sqrt{L}\right)\right) sinon} \end{cases} \quad (9)$$

Avec l entier compris entre 0 et L-1, L étant la longueur de la séquence. Comme dans le premier exemple, elle est égale à la moitié du nombre de porteuses Mi alloué à l'équipement émetteur UEi.

Une séquence de type Björck est connue de l'homme de métier comme appartenant à la famille des séquences CAZAC. Elle en possède donc les propriétés particulières, notamment en ce qui concerne l'enveloppe constante.

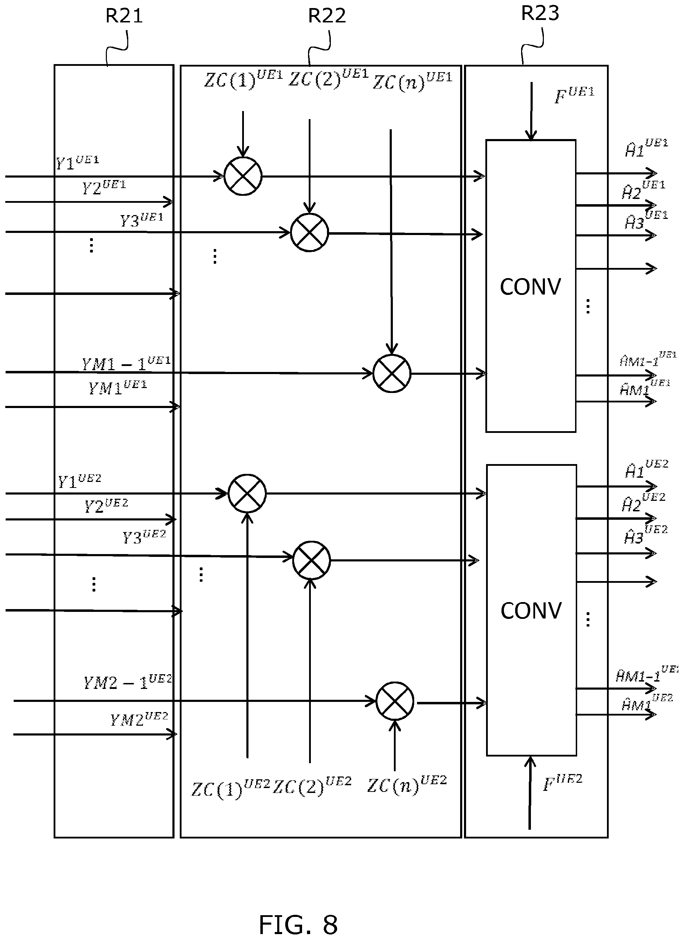

En relation avec la figure **8,** on détaille maintenant l'étape d'estimation de canal R2 mise en œuvre selon un premier mode de réalisation de l'invention. A titre d'exemple, on considère une séquence de pilotes comprenant une sous-séquence de complexes de type Zadoff-Chu.

Comme dans l'exemple de la Figure **3,** on considère deux équipements émetteurs UE1 et UE2 qui émettent chacun un signal multi-porteuses SE1, SE2 à destination d'un équipement récepteur ER.

L'équipement récepteur ER leur a préalablement alloué respectivement un ensemble de M1 et un ensemble de M2 porteuses, que l'on suppose disjoints.

A titre d'exemple, on considère que l'équipement de réception ER a alloué 4 blocs de ressources RB (pour « Resource Block », en anglais) à l'équipement client UE1.

On considère, comme dans les spécifications 3GPP LTE, qu'un bloc de ressources RB compte 12 porteuses. L'équipement client UE1 dispose donc d'une bande de M1=48 porteuses. On suppose en outre que l'équipement de réception ER a attribué la séquence racine $q_1 = 1$ à l'équipement client UE1.

On considère que l'équipement de réception ER a alloué 5 blocs de ressources RB à l'équipement client UE2. L'équipement client UE2 dispose donc d'une bande de M2=60 porteuses. On suppose en outre que l'équipement de réception ER a attribué la séquence racine $q_2 = 2$ à l'équipement client UE2.

La séquence Zadoff-Chu de l'équipement client UE1 est donc de longueur $M_1/2$=24, le plus grand nombre premier inférieur à 24 est $N_{ZC} = 23$ et les éléments de la séquence s'expriment de la façon suivante :

$$ZC^{UE1}(l) = e^{\frac{j\pi q_1 l(l+1)}{N_{ZC}}} = e^{\frac{j\pi l(l+1)}{23}} \text{ pour n compris entre 1 et 23 (10)}$$

$$ZC^{UE1}(24) = ZC^{UE1}(1) \quad (11)$$

Les 24 éléments de la séquence sont insérés sur les 24 porteuses impaires de l'ensemble M1 de porteuses alloué à UE1.

La séquence Zadoff-Chu de l'équipement client UE2 est donc de longueur $M_1/2$=30, le plus grand nombre premier inférieur à 30 est $N_{ZC} = 29$ et les éléments de la séquence s'expriment de la façon suivante :

$$SC2 = ZC^{UE2}(l) = e^{\frac{j\pi q_2 l(l+1)}{N_{ZC}}} = e^{\frac{j\pi l(l+1)}{29}} \text{ pour l compris entre 1 et 29 (12)}$$

$$SC2 = ZC^{UE2}(30) = ZC^{UE2}(1) \quad (13)$$

Côté émetteurs, la séquence SCi de l'équipement émetteur UEi est d'abord insérée sur les porteuses impaires de la bande allouée à l'équipement émetteur UEi lors du multiplexage à l'entrée de la modulation OQAM.

Des valeurs nulles sont insérées sur le reste des porteuses, c'est-à-dire les porteuses paires.

Dans cet exemple de réalisation de l'invention, on considère que chaque équipement émetteur UEi insère sa séquence de pilotes SPi à un instant TS = 0 du signal multi-porteuses SEi qu'il émet. Il commence donc par émettre un préambule avant d'envoyer des données utiles.

Ce cas est particulièrement adapté à un contexte de communication asynchrone tel que celui des communications MMC dans lequel l'équipement émetteur doit pouvoir émettre des éléments des données, par exemple de type mesure à destination d'un équipement collecteur, à l'instant qu'il souhaite.

Il en résulte qu'aucune donnée utile ne précède la séquence SCi = ZC$^{UEi}$.

Ensuite les signaux modulés SEi sont transmis dans les canaux de communication CHi.

Côté récepteur ER, un seul signal SR est reçu résultant de cette combinaison et du passage dans les canaux de communication CHi.

On notera que dans le cas asynchrone, contrairement au cas synchrone, l'équipement récepteur ne détermine pas pour un équipement émetteur UEi, en fonction de son canal de communication CHi, un instant d'émission de son signal SEi de façon à ce qu'il soit reçu à un instant prédéterminé. Au contraire, l'équipement récepteur ne connait pas l'instant d'arrivée des données émises par l'équipement UEi.

Suite à la démodulation du signal reçu en R1, l'étape d'estimation de canal R2 met en œuvre les sous-étapes suivantes :

- En R21, une extraction des valeurs complexes correspondant aux valeurs non nulles de la sous-séquence SC de la séquence de pilotes SP modulant les porteuses impaires de l'ensemble de porteuses alloué à UEi, après passage dans le canal de transmission CHi,

- une estimation R22 d'une réponse impulsionnelle $\widehat{H^{UEi}}$ du canal de transmission CHi sur les porteuses impaires de l'ensemble Mi alloué à l'équipement émetteur UEi. Au cours de cette étape, les valeurs complexes extraites sur les porteuses impaires sont multipliées par le conjugué de la valeur complexe correspondante de la séquence SCi propre à l'équipement client UEi.

En effet, si on désigne par $y_{2n+1}^{UEi}$ la valeur complexe extraite de la porteuse 2n+1, avec n entier compris entre 0 et Mi/2, s'exprime comme suit :

$$y_{2n+1}^{UEi} = H_{2n+1}^i \cdot (SC_{2n+1}^{UEi} + I) + b \ (14)$$

Or, du fait de la construction de la séquence de pilotes SPi et de son positionnement à TS=0, chaque valeur complexe non nulle de la sous-séquence SCi est entouré de valeurs voisines nulles, si bien que la composante I d'interférence peut être considérée comme négligeable.

On obtient :

$$y_{2n+1}^{UEi} = H_{2n+1}^i \cdot SC^i{}_{2n+1}^{UEi} + b$$

Il en résulte qu'on peut estimer le coefficient du canal de communication CHi pour la porteuse mi= 2n+1, en multipliant la valeur complexe extraite de la porteuse mi (impaire) par le conjugué de la valeur complexe correspondante de la séquence SCi propre à l'équipement client UEi, de la façon suivante :

$$\widehat{H}_{2n+1}^{UEi} = y_{2n+1}^{UEi} \cdot \left[ SC_{2n+1}^{UEi} \right]^* (14)$$

A l'issue de R21, on dispose d'une estimation de la réponse fréquentielle du canal de communication CHi sur les porteuses impaires.

L'étape d'estimation de canal comprend enfin une estimation R23 de la réponse fréquentielle du canal de transmission sur les porteuses impaires, c'est-à-dire celles correspondant aux valeurs nulles de la séquence de pilotes par interpolation des valeurs estimées sur les porteuses paires. Avantageusement, cette étape met en œuvre une convolution de la réponse fréquentielle estimée sur les porteuses impaires avec un filtre $F^{UEi}$ prédéfini, par exemple de type passe-bas.

A l'issue de cette sous-étape, on dispose d'une estimation du canal de communication CHi sur toutes les porteuses de l'ensemble Mi alloué à l'équipement UEi.

En variante, on considère maintenant que la séquence de pilotes est insérée à un instant TS non nul. Dans ce cas, pour éviter que des interférences entre symboles soient générées, au moins deux modes de réalisation de l'invention sont envisagés :

- une séquence de valeurs nulles est insérées à l'instant TS-τ0 précédent l'instant d'émission de la sous-séquence SC de valeurs complexes non nulles ;

- les éléments de données informatifs transmis à l'instant TS-τ0 précédent l'instant d'émission sont modulés sur l'ensemble de Mi porteuses alloué à l'équipement UEi selon une modulation OQAM particulière, par exemple de type Cyclic-OQAM, qui minimise le recouvrement spectral entre deux instants successifs.

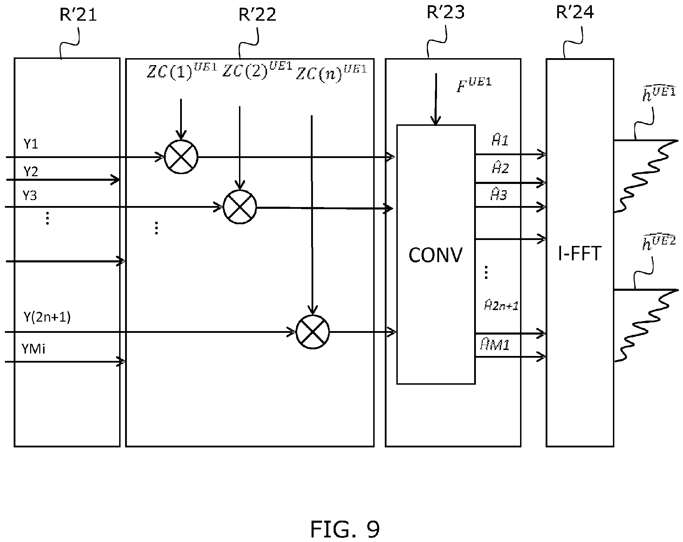

En relation avec la Figure **9,** on détaille maintenant l'étape d'estimation de canal R'2 mise en œuvre selon un deuxième mode de réalisation de l'invention. A titre d'exemple, on considère une séquence de pilotes comprenant une sous-séquence de complexes de type Zadoff-Chu.

Dans ce deuxième exemple, on considère en particulier que les ensembles de porteuses M1, M2 alloués aux équipements émetteurs UE1 et UE2 sont identiques et se recouvrent complètement, donc que Mi=M1=M2.

C'est le cas par exemple dans un contexte de communication de type MU-MIMO, dans lequel l'équipement récepteur comprend plusieurs antennes de réception qui lui permettent de dissocier les signaux provenant des différents équipements émetteurs UE1, UE2 et d'estimer la réponse du canal de communication CH1, CH2 de chacun d'eux.

A titre d'exemple, on considère que l'équipement de réception ER a alloué les 4 mêmes blocs de ressources RB aux équipements émetteurs UE1 et UE2.

La séquence Zadoff-Chu de l'équipement client UE1 est donc de longueur $M_1/2{=}24$, le plus grand nombre premier inférieur à 24 est $N_{ZC} = 23$ et les éléments de la séquence s'expriment, comme dans le cas précédent, de la façon suivante :

$$ZC^{UE1}(l) = e^{\frac{j\pi q_1 l(l+1)}{N_{ZC}}} = e^{\frac{j\pi l(l+1)}{23}} \text{ pour n compris entre 1 et 23 (11)}$$

$$ZC^{UE1}(24) = ZC^{UE1}(1) \quad (12)$$

Quant à la séquence Zadoff-Chu de l'équipement client UE2, elle s'exprime comme suit : $ZC^{UE2}(l) = ZC^{UE1}(l).e^{j\pi(l-1)}$ pour l compris entre 1 et 24 (14)

$FR = e^{j\pi(l-1)}$ est un facteur de rotation de phase qui permettra à l'équipement récepteur d'estimer les deux canaux de communication CH1, CH2 à partir du signal SR reçu sur la même bande de fréquences.

Dans cet exemple, on suppose que les communications entre les équipements émetteurs UE1, UE2 et l'équipement récepteur ER sont synchrones. Côté récepteur, l'étape d'estimation R'2 met en œuvre les sous-étapes suivantes :

- estimation R'21 des composantes $\hat{H}_{2n+1}$ du canal de communication, avec n compris entre 1 et (Mi-1)/2, à partir des valeurs complexes extraites des porteuses impaires, similaire à R21. Par exemple, elles sont obtenues en multipliant la valeur complexe extraite d'une porteuse mi (impaire) par le conjugué de la valeur complexe correspondante de la séquence SC1 propre à l'équipement émetteur UE1. En variante, on pourrait utiliser la séquence SC2 propre à l'équipement émetteur UE2.
  On comprend qu'ici on a estimé une combinaison des réponses fréquentielles des deux canaux de communication CH1, CH2 empruntés respectivement par les signaux SE1, SE2 émis par les équipements clients UE1, UE2 ;

- interpolation R'22 pour obtenir les composantes $\hat{H}_{2n}$ du canal de communication sur les porteuses paires, similaire à R22, par exemple par convolution à l'aide d'un filtre prédéfini $F^{UE1}$ ou $F^{UE2}$;

- application R'23 d'une transformation inverse de type I-FFT (« Inverse Fast Fourier Transform », en anglais) aux composantes de la réponse fréquentielle du canal $\hat{H}_m$, avec m compris entre 1 et Mi obtenues, de façon à séparer temporellement les composantes du canal de communication CH1 de celles du canal de communication CH2. Cette séparation est rendue possible par le facteur de rotation de phase FR précédemment décrit, dont la multiplication fréquentielle est convertie, du fait de la transformation inverse, en un décalage temporel.

A l'issue de cette dernière étape R'23, on obtient les réponses impulsionnelles $\widetilde{h^{UE1}}$, $\widetilde{h^{UE2}}$ de chaque canal de communication CH1, CH2.

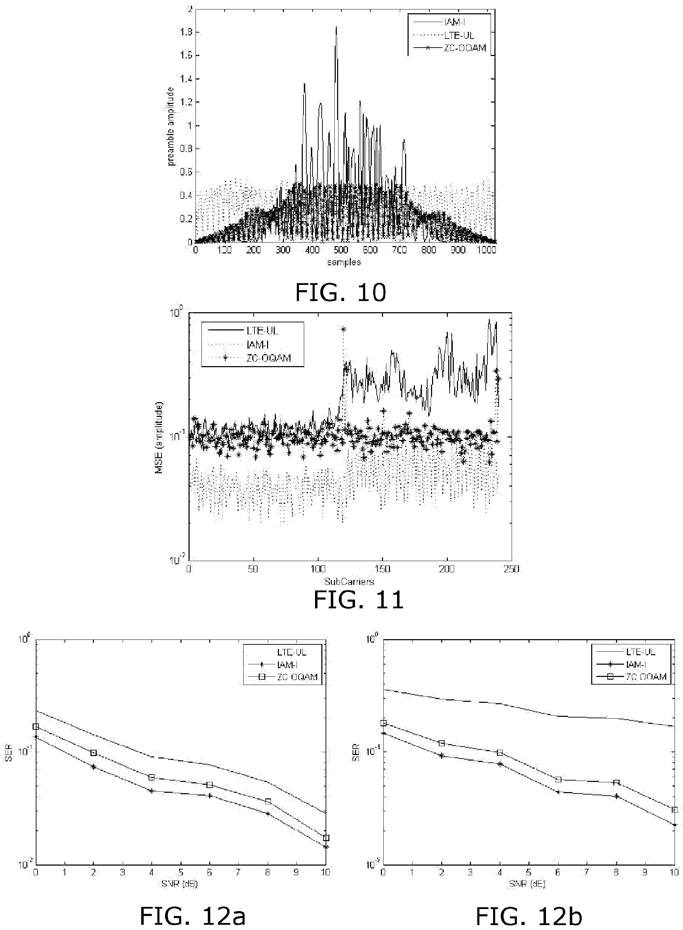

En relation avec les Figures **10, 11** et **12,** on présente une comparaison de résultats obtenus par l'estimation de canal selon l'invention (désignée ZC-OQAM) avec ceux des techniques de l'art antérieur, pour deux équipements émetteurs émettant sur des bandes de fréquences séparées, dans un contexte asynchrone. Les techniques antérieures utilisées comme référence sont en particulier d'une modulation OFDM classique associée à une estimation de canal de type LS pour Least Square tele que spécifiée dans la norme LTE (désignée LTE-UL) et d'une modulation OFDM-OQAM associée à une estimation de canal IAM-I (désignée OQAM IAM-I).

La Figure **10** concerne le PAPR généré par chacune des techniques. On voit que la technique de réception selon l'invention génère une amplitude de préambule, donc un niveau de PAPR bien plus faible que la technique antérieure OQAM IAM-I.

La Figure **11** illustre le niveau d'erreur moyen MSE (pour « Mean Square Error », en anglais) de l'estimation de canal obtenu avec ces trois techniques, dans une situation particulière, où un premier équipement émetteur UE1 est d'abord seul à émettre, suivi d'un deuxième équipement émetteur UE2 qui émet en même temps que lui. On constate que tant qu'un seul équipement émet, les trois techniques obtiennent des résultats similaires, mais qu'à partir du moment où les deux équipements UE1, UE2 émettent en même temps, la technique OFDM classique ne parvient pas à estimer correctement les deux canaux. En revanche, la technique selon l'invention génère un niveau de MSE pour l'estimation de canal qui reste satisfaisant, même après l'arrivée des données du deuxième équipement utilisateur.

Les figures **12a** et **12b** concernent des mesures de SER (pour « Symbol Error Rate », en anglais) obtenues à la réception, en fonction du SNR (pour « Signal to Noise Ratio », en anglais). On voit, sur la Figure **12a** que la technique de réception selon l'invention réalise des performances comparables aux techniques de l'art antérieur pour le premier équipement récepteur. La Figure 12b concerne la réception du signal provenant du deuxième équipement émetteur. Elle montre que la technique OFDM LS classique n'arrive pas à le correctement, alors que la technique selon l'invention obtient des résultats comparables à ceux de OQAM-IAMI.

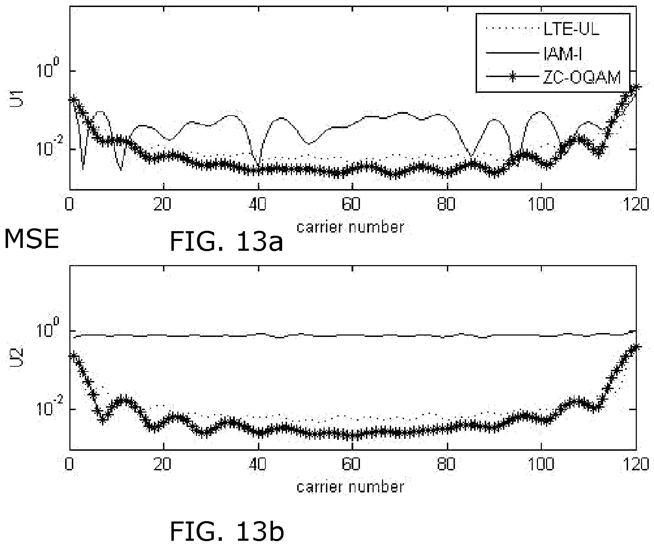

En relation avec les Figures **13a** et **13b,** on compare les performances d'estimation de canal, en termes de MSE, obtenues par les trois techniques précédentes, dans le cas où deux équipements émetteurs émettent sur la même bande de fréquences dans un contexte de communication synchrone. La technique selon l'invention (ZC-OQAM) obtient des résultats similaires à la technique OFDM classique (LTE-UL) pour le premier et le deuxième équipements clients, alors que la technique OQAM-IAM-I ne parvient pas à estimer le canal pour le deuxième équipement émetteur.

## Revendications

1. Procédé d'émission d'un signal multi-porteuses (SE1, SE2) mettant en œuvre une modulation de type OQAM, destiné à être transmis via un canal de transmission (CH1, CH2), formé d'une succession temporelle de symboles constitués d'un ensemble d'éléments de données comprenant :

   - Des éléments de données informatifs à valeurs réelles, et
   - Pour au moins certains desdits symboles, des éléments de données de référence, appelés pilotes, connus d'au moins un récepteur destiné à effectuer une réception du signal multi-porteuses,

   Chacun desdits éléments de données modulant une fréquence porteuse dudit signal, une fréquence porteuse modulée par un desdits éléments de données étant appelée porteuse,
   Un ensemble de porteuses (M1, M2) étant alloué à un équipement émetteur (UE1, UE2),
   **Caractérisé en ce que** ledit procédé d'émission comprend une étape (E4) d'insertion d'une séquence de pilotes (SP, SP') propre audit équipement émetteur (UE1, UE2) à un instant donné, TS, dans le signal multi-porteuses (SE1, SE2) sur ledit ensemble de porteuses alloué, ladite séquence de pilotes comprenant :

   - Une séquence de valeurs complexes non nulles, insérées sur les porteuses impaires ou paires, en alternance avec des valeurs nulles, insérées sur les autres porteuses respectivement paires ou impaires,
   - Les valeurs complexes non nulles de la séquence de pilotes sont choisies de façon à ce que le signal modulé produit soit à enveloppe constante, de même que toute transformée temps-fréquence de ce signal et que toute transformée inverse de cette transformée temps-fréquence, et
   - une séquence de valeurs nulles modulant les porteuses de l'ensemble de porteuses alloué à l'instant suivant, Ts+$\tau$0 où $\tau$0 est l'espacement temporel entre deux symboles.

2. Procédé d'émission d'un signal multi-porteuses selon la revendication **1, caractérisé en ce que** la séquence de valeurs complexes non nulles de la séquence de pilotes est une séquence de type CAZAC de longueur, L, à la moitié du nombre de porteuses (M1, M2) alloué à l'équipement émetteur (UE1, UE2).

3. Procédé d'émission d'un signal multi-porteuses selon la revendication **2, caractérisé en ce que** la séquence de valeurs complexes non nulles de la séquence de pilotes est une séquence de type Zadoff-Chu, définie par l'expression suivante :

$$ZC(l) = e^{\frac{j\pi ql(l+1)}{N_{ZC}}}$$

Avec l, indice de la valeur complexe dans la séquence, q entier correspondant à une séquence racine propre à l'équipement client et Nzc égal au plus grand nombre premier inférieur à la longueur, L, de la séquence.

**4.** Procédé d'émission d'un signal multi-porteuses selon la revendication 2, **caractérisé en ce que** la séquence de valeurs complexes non nulles de la séquence de pilotes est une séquence de type Björck, définie par l'expression suivante :

$$BS(l) = \frac{1}{\sqrt{L}}.a, \text{ avec } a = \begin{cases} 1 \ pour \ l = 0 \\ e^{j\left(\cos^{(1}/_{1+\sqrt{L}})\right) pour \ l=u^2 \ mod \ L \ et \ u=1,...,L-1} \\ e^{-j\left(\cos^{(1}/_{1+\sqrt{L}})\right) sinon} \end{cases}$$

et L longueur de la séquence.

**5.** Procédé d'émission d'un signal multi-porteuses selon l'une des revendications précédentes, **caractérisé en ce que** les valeurs complexes non nulles de la séquence de pilotes sont multipliées par un facteur de rotation de phase, FR.

**6.** Procédé d'émission d'un signal multi-porteuses selon l'une des revendications précédentes, **caractérisé en ce que** la séquence de pilotes est insérée dans le signal multi-porteuses à un instant TS non nul et comprend en outre une séquence de valeurs nulles modulant les porteuses de l'ensemble de porteuses alloué à l'instant précédent, TS-τ0.

**7.** Procédé d'émission d'un signal multi-porteuses selon l'une des revendications **1** à **5, caractérisé en ce que** la séquence de pilotes est insérée dans le signal multi-porteuses à un instant TS non nul, les éléments de données informatifs insérés à un instant précédent, TS-τ0, modulant les modulant les porteuses de l'ensemble des porteuse allouées selon une modulation de type cyclic OQAM.

**8.** Dispositif ($100_1$, $100_2$) d'émission d'un signal multi-porteuses (SE1, SE2) mettant en œuvre une modulation de type OQAM, destiné à être transmis via un canal de transmission (CH1, CH2), formé d'une succession temporelle de symboles constitués d'un ensemble d'éléments de données comprenant :

- Des éléments de données informatifs à valeurs réelles, et
- Pour au moins certains desdits symboles, des éléments de données de référence, appelés pilotes, connus d'au moins un récepteur destiné à effectuer une réception du signal multi-porteuses,

Chacun desdits éléments de données modulant une fréquence porteuse dudit signal, une fréquence porteuse modulée par un desdits éléments de données étant appelée porteuse,
Un ensemble de porteuses étant alloué à un équipement émetteur,
**Caractérisé en ce que** ledit dispositif d'émission comprend une unité d'insertion d'une séquence de pilotes (SP1, SP2) propre audit équipement émetteur à un instant donné, TS, dans le signal multi-porteuses sur ledit ensemble de porteuses alloué, ladite séquence de pilotes comprenant :

- Une séquence de valeurs complexes non nulles, insérées sur les porteuses impaires ou paires, en alternance avec des valeurs nulles, insérées sur les autres porteuses respectivement paires ou impaires,
- Les valeurs complexes non nulles de la séquence de pilotes sont choisies de façon à ce que le signal modulé produit soit à enveloppe constante, de même que toute transformée temps-fréquence de ce signal et que toute transformée inverse de cette transformée temps-fréquence, et
- une séquence de valeurs nulles modulant les porteuses de l'ensemble de porteuses alloué à l'instant suivant, TS+τ0 où τ0 est l'espacement temporel entre deux symboles.

**9.** Procédé de réception d'un signal correspondant à au moins un signal multi-porteuses mettant en œuvre une modulation de type OQAM, émis par au moins un équipement émetteur via un canal de transmission, ledit signal étant formé d'une succession temporelle de symboles constitués d'un ensemble d'éléments de données comprenant :

- Des éléments de données informatifs à valeurs réelles, et

- Pour au moins certains desdits symboles, des éléments de données de référence, appelés pilotes, connus d'au moins un récepteur destiné à effectuer une réception du signal multi-porteuses,

Chacun desdits éléments de données modulant une fréquence porteuse dudit signal, une fréquence porteuse modulée par un desdits éléments de données étant appelée porteuse,

Un ensemble de porteuses étant alloué audit équipement émetteur, **Caractérisé en ce que**, une séquence de pilotes propre audit équipement émetteur ayant été insérée dans le signal multi-porteuses sur ledit ensemble de porteuses alloué, ladite séquence de pilotes comprenant :

- Une séquence de valeurs complexes non nulles, insérées sur les porteuses paires ou impaires, en alternance avec des valeurs nulles, insérées sur les autres porteuses, à un instant donné, TS,
- Les valeurs complexes non nulles de la séquence de pilotes sont choisies de façon à ce que le signal modulé produit soit à enveloppe constante, de même que toute transformée temps-fréquence de ce signal et que toute transformée inverse de cette transformée temps-fréquence, et
- une séquence de valeurs nulles modulant les porteuses de l'ensemble de porteuses alloué insérée à l'instant suivant, TS +$\tau$0, où $\tau$0 est l'espacement temporel entre deux symboles,

Ledit procédé de réception comprend :

- Une étape d'extraction de valeurs complexes correspondant aux valeurs non nulles de la séquence de pilotes sur les porteuses impaires ou paires, après passage dans le canal de transmission,
- Une étape d'estimation d'une réponse fréquentielle dudit canal de transmission sur les porteuses impaires ou paires à partir des valeurs complexes extraites,
- Une étape d'estimation d'une réponse fréquentielle du canal de transmission sur les autres porteuses, respectivement paires ou impaires par interpolation fréquentielle de la réponse du canal estimées sur les porteuses impaires ou paires.

10. Procédé de réception d'un signal correspondant à au moins un signal multi-porteuses mettant en œuvre une modulation de type OQAM, selon la revendication **9, caractérisé en ce que**, l'ensemble de porteuses ayant été alloué à au moins un deuxième équipement émetteur, ledit procédé comprend en outre une étape de transformation temps-fréquence inverse destinée à séparer sur les porteuses de l'ensemble de porteuses alloué les composantes issue d'un premier signal multi-porteuses émis par le premier équipement émetteur de celles issues d'au moins un deuxième signal multi-porteuses émis par au moins un deuxième équipement client.

11. Dispositif de réception d'un signal correspondant à au moins un signal multi-porteuses mettant en œuvre une modulation de type OQAM, émis par au moins un équipement émetteur via un canal de transmission, ledit signal étant formé d'une succession temporelle de symboles constitués d'un ensemble d'éléments de données comprenant :

- Des éléments de données informatifs à valeurs réelles, et
- Pour au moins certains desdits symboles, des éléments de données de référence, appelés pilotes, connus d'au moins un récepteur destiné à effectuer une réception du signal multi-porteuses,

Chacun desdits éléments de données modulant une fréquence porteuse dudit signal, une fréquence porteuse modulée par un desdits éléments de données étant appelée porteuse,

Un ensemble de porteuses étant alloué audit équipement émetteur,

**Caractérisé en ce que**, une séquence de pilotes propre audit équipement émetteur ayant été insérée à un instant donné, TS, dans le signal multi-porteuses sur ledit ensemble de porteuses alloué, ladite séquence de pilotes comprenant :

- Une séquence des valeurs complexes non nulles, insérées sur les porteuses paires ou impaires, en alternance avec des valeurs nulles, insérées sur les autres porteuses,
- Les valeurs complexes non nulles de la séquence de pilotes sont choisies de façon à ce que le signal modulé produit soit à enveloppe constante, de même que toute transformée temps-fréquence de ce signal et que toute transformée inverse de cette transformée temps-fréquence, et
- une séquence de valeurs nulles modulant les porteuses de l'ensemble de porteuses allouées insérée à l'instant suivant, TS +$\tau$0, où $\tau$0 est l'espacement temporel entre deux symboles,

Ledit dispositif de réception comprend les unités suivantes:

- extraction de valeurs complexes correspondant aux valeurs non nulles de la séquence de pilotes sur les porteuses impaires ou paires, après passage dans le canal de transmission,
- estimation d'une réponse fréquentielle dudit canal de transmission sur les porteuses impaires ou paires à partir des valeurs complexes extraites, et
- estimation d'une réponse fréquentielle du canal de transmission sur les autres porteuses, respectivement paires ou impaires par interpolation fréquentielle de la réponse du canal estimées sur les porteuses impaires ou paires.

**12.** Signal multi-porteuses mettant en œuvre une modulation de type OQAM, formé d'une succession temporelle de symboles constitués d'un ensemble de données comprenant :

- Des éléments de données informatifs à valeurs réelles, et
- Pour au moins certains desdits symboles, des éléments de données de référence, appelés pilotes, connus d'au moins un équipement récepteur destiné à effectuer une réception du signal multi-porteuses,

Chacun desdits éléments de données modulant une fréquence porteuse dudit signal, une fréquence porteuse modulée par un desdits éléments de données étant appelée porteuse,
Un ensemble de porteuses étant alloué audit équipement émetteur,
**Caractérisé en ce qu'**il comprend une séquence de pilotes propre audit équipement émetteur, insérée à un instant donné TS dans le signal multi-porteuses sur ledit ensemble de porteuses alloué et **en ce que** ladite séquence de pilotes comprend :

- Une séquence de valeurs complexes non nulles, insérées sur les porteuses impaires ou paires, en alternance avec des valeurs nulles, insérées sur les autres porteuses, respectivement paires ou impaires,
- Les valeurs complexes non nulles de la séquence de pilotes sont choisies de façon à ce que le signal modulé produit soit à enveloppe constante, de même que toute transformée temps-fréquence de ce signal et que toute transformée inverse de cette transformée temps-fréquence, et
- une séquence de valeurs nulles modulant les porteuses de l'ensemble de porteuses alloué à l'instant suivant, TS+$\tau$0 où $\tau$0 est l'espacement temporel entre deux symboles,

**13.** Programme d'ordinateur téléchargeable depuis un réseau de communication et/ou enregistré sur un support lisible par ordinateur et/ou exécutable par un processeur, **caractérisé en ce qu'**il comprend les instructions de code de programme pour la mise en œuvre du procédé d'émission selon l'une des revendications **1** à **7.**

**14.** Programme d'ordinateur téléchargeable depuis un réseau de communication et/ou enregistré sur un support lisible par ordinateur et/ou exécutable par un processeur, **caractérisé en ce qu'**il comprend les instructions de code de programme pour la mise en œuvre du procédé de réception selon l'une des revendications **9** et **10.**

**Patentansprüche**

**1.** Verfahren zum Senden eines Mehrfachträgersignals (SE1, SE2), das eine Modulation des OQAM-Typs ausführt und dazu bestimmt ist, über einen Sendekanal (CH1, CH2), der aus einer zeitlichen Folge von Symbolen gebildet ist, die aus einer Gesamtheit von Datenelementen gebildet sind, gesendet zu werden, wobei die Folge umfasst:

- Informations-Datenelemente mit reellen Werten und
- wenigstens für bestimmte Symbole Referenz-Datenelemente, die Pilotsymbole genannt werden und wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine Trägerfrequenz, die durch eines der Datenelemente moduliert wird, Träger genannt wird,
wobei einem Sendergerät (UE1, UE2) eine Gesamtheit (M1, M2) von Trägern zugewiesen ist,
**dadurch gekennzeichnet, dass** das Sendeverfahren einen Schritt (E4) des Einsetzens einer Pilotsymbolfolge (SP, SP'), die zu dem Sendergerät (UE1, UE2) gehört, zu einem gegebenen Zeitpunkt, TS, in das Mehrfachträgersignal (SE1, SE2) über die zugewiesene Gesamtheit von Trägern umfasst, wobei die Pilotsymbolfolge Folgendes enthält:

- eine Folge von von Null verschiedenen komplexen Werten, die in ungerade oder gerade Träger eingesetzt werden, abwechselnd mit Null-Werten, die in die anderen geraden bzw. ungeraden Träger eingesetzt werden,
- wobei die von Null verschiedenen komplexen Werte der Folge von Pilotsymbolen in der Weise gewählt werden, dass das erzeugte modulierte Signal ebenso wie jede Zeit/Frequenz-Transformierte dieses Signals und wie jede inverse Transformierte dieser Zeit/Frequenz-Transformierten eine konstante Einhüllende besitzt,
- wobei eine Folge von Null-Werten die Träger der zu dem folgenden Zeitpunkt, Ts + $\tau$0, zugewiesenen Gesamtheit von Trägern moduliert, wobei $\tau$0 der zeitliche Abstand zwischen zwei Symbolen ist.

2. Verfahren zum Senden eines Mehrfachträgersignals nach Anspruch 1, **dadurch gekennzeichnet, dass** die Folge von von Null verschiedenen komplexen Werten der Folge von Pilotsymbolen eine Folge des CAZAC-Typs ist, deren Länge gleich der Hälfte der Anzahl von Trägern (M1, M2), die dem Sendergerät (UE1, UE2) zugewiesen sind, ist.

3. Verfahren zum Senden eines Mehrfachträgersignals nach Anspruch 2, **dadurch gekennzeichnet, dass** die Folge von von Null verschiedenen komplexen Werten der Folge von Pilotsymbolen eine Folge des Zadoff-Chu-Typs ist, die durch den folgenden Ausdruck definiert ist:

$$ZC(l) = e^{\frac{j\pi q l(l+1)}{N_{zc}}}$$

wobei l der Index des komplexen Wertes in der Folge ist, q eine ganze Zahl ist, die einer Wurzelfolge des Client-Geräts entspricht, und $N_{ZC}$ gleich der größten Primzahl ist, die kleiner als die Länge, L, der Folge ist.

4. Verfahren zum Senden eines Mehrfachträgersignals nach Anspruch 2, **dadurch gekennzeichnet, dass** die Folge von von Null verschiedenen komplexen Werten der Folge von Pilotsymbolen eine Folge des Björck-Typs ist, die durch den folgenden Ausdruck definiert ist:

$$BS(l) = \frac{1}{\sqrt{L}} \cdot a,$$

mit

$$a = \begin{cases} 1 & \text{für } l = 0 \\ e^{j\left(\cos\left(\frac{1}{1+\sqrt{L}}\right)\right)} & \text{für } l = u^2 \bmod L \text{ und } u = 1, \dots, L-1, \\ e^{-j\left(\cos\left(\frac{1}{1+\sqrt{L}}\right)\right)} & \text{sonst} \end{cases}$$

wobei L die Länge der Folge ist.

5. Verfahren zum Senden eines Mehrfachträgersignals nach einem der vorhergehenden Ansprüche, **dadurch gekennzeichnet, dass** die von Null verschiedenen komplexen Werte der Pilotsymbolfolge mit einem Phasendrehungsfaktor, FR, multipliziert werden.

6. Verfahren zum Senden eines Mehrfachträgersignals nach einem der vorhergehenden Ansprüche, **dadurch gekennzeichnet, dass** die Pilotsymbolfolge in das Mehrfachträgersignal zu einem von Null verschiedenen Zeitpunkt TS eingesetzt wird und außerdem eine Folge von Null-Werten umfasst, die die Träger der Gesamtheit von Trägern, die zum vorhergehenden Zeitpunkt, TS - $\tau$0, zugewiesen wurde, modulieren.

7. Verfahren zum Senden eines Mehrfachträgersignals nach einem der Ansprüche 1 bis 5, **dadurch gekennzeichnet, dass** die Pilotsymbolfolge in das Mehrfachträgersignal zu einem von Null verschiedenen Zeitpunkt TS eingesetzt wird, wobei die Informations-Datenelemente, die zu einem vorhergehenden Zeitpunkt, TS - $\tau$0, eingesetzt werden, die zugewiesen Träger der Gesamtheit von Trägern gemäß einer Modulation des zyklischen OAQM-Typs modulieren.

**8.** Vorrichtung ($100_1$, $100_2$) zum Senden eines Mehrfachträgersignals (SE1, SE2), die eine Modulation des OQAM-Typs ausführt, das dazu bestimmt ist, über einen Sendekanal (CH1, CH2), der aus einer zeitlichen Folge von Symbolen gebildet ist, die aus einer Gesamtheit von Datenelementen gebildet sind, gesendet zu werden, wobei die Folge enthält:

- Informations-Datenelemente mit reellen Werten, und
- wenigstens für bestimmte Symbole Referenz-Datenelemente, die Pilotsymbole genannt werden und wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine Trägerfrequenz, die durch eines der Datenelemente moduliert wird, Träger genannt wird,
wobei einem Sendergerät eine Gesamtheit von Trägern zugewiesen ist,
**dadurch gekennzeichnet, dass** die Sendevorrichtung eine Einheit zum Einsetzen einer Folge (SP1, SP2) von Pilotsymbolen, die zu dem Sendergerät gehören, zu einem gegebenen Zeitpunkt, TS, in das Mehrfachträgersignal über die Gesamtheit zugewiesener Träger umfasst, wobei die Pilotsymbolfolge Folgendes umfasst:

- eine Folge von von Null verschiedenen komplexen Werten, die in ungerade oder gerade Träger eingesetzt werden, abwechselnd mit Null-Werten, die in die anderen geraden bzw. ungeraden Träger eingesetzt sind,
- wobei die von Null verschiedenen komplexen Werte der Pilotsymbolfolge in der Weise gewählt sind, dass das erzeugte modulierte Signal ebenso wie jede Zeit/Frequenz-Transformierte dieses Signals und jede inverse Transformierte dieser Zeit/Frequenz-Transformierten eine konstante Einhüllende besitzt,
- eine Folge von Null-Werten, die die Träger der Gesamtheit von Trägern, die zum folgenden Zeitpunkt, TS + $\tau 0$, zugewiesen werden, moduliert, wobei $\tau 0$ der zeitliche Abstand zwischen zwei Symbolen ist.

**9.** Verfahren zum Empfangen eines Signals, das wenigstens einem Mehrfachträgersignal entspricht, das eine Modulation des OQAM-Typs ausführt, das von wenigstens einem Sendergerät über einen Sendekanal gesendet wird, wobei das Signal aus einer zeitlichen Folge von Symbolen gebildet ist, die aus einer Gesamtheit von Datenelementen gebildet sind, wobei die Folge enthält:

- Informations-Datenelemente mit reellen Werten, und
- wenigstens für bestimmte Symbole Referenz-Datenelemente, die Pilotsymbole genannt werden und wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine Trägerfrequenz, die durch eines der Datenelemente moduliert wird, Träger genannt wird,
wobei dem Sendergerät eine Gesamtheit von Trägern zugewiesen ist,
**dadurch gekennzeichnet, dass** eine Pilotsymbolfolge, die zu dem Sendergerät gehört, in das Mehrfachträgersignal über die Gesamtheit zugewiesener Träger eingesetzt worden ist, wobei die Pilotsymbolfolge Folgendes enthält:

- eine Folge von von Null verschiedenen komplexen Werten, die zu einem gegebenen Zeitpunkt, TS, in die geraden oder ungeraden Träger eingesetzt werden, abwechselnd mit Null-Werten, die in die anderen Träger eingesetzt werden,
- wobei die von Null verschiedenen komplexen Werte der Pilotsymbolfolge in der Weise gewählt werden, dass das erzeugte modulierte Signal ebenso wie jede Zeit/Frequenz-Transformierte dieses Signals und jede inverse Transformierte dieser Zeit/Frequenz-Transformierten eine konstante Einhüllende besitzt, und
- eine Folge von Null-Werten, die die Träger der zugewiesenen Gesamtheit von Trägern, die zu dem folgenden Zeitpunkt, TS + $\tau 0$, eingesetzt wird, modulieren, wobei $\tau 0$ der zeitliche Abstand zwischen zwei Symbolen ist,

wobei das Empfangsverfahren Folgendes umfasst:

- einen Schritt des Extrahierens komplexer Werte, die den von Null verschiedenen komplexen Werten der Pilotsymbolfolge in den ungeraden oder geraden Trägern entsprechen, nach dem Durchgang durch den Sendekanal,
- einen Schritt des Schätzens einer Frequenzantwort des Sendekanals an den ungeraden oder geraden Trägern ausgehend von den extrahierten komplexen Werten,
- einen Schritt des Schätzens einer Frequenzantwort des Sendekanals an den anderen geraden bzw. ungeraden Trägern durch Frequenzinterpolation der Antwort des geschätzten Kanals an den ungeraden oder geraden Trägern.

10. Verfahren zum Empfangen eines Signals, das wenigstens einem Mehrfachträgersignal entspricht, das eine Modulation des OQAM-Typs ausführt, nach Anspruch 9, **dadurch gekennzeichnet, dass** die Gesamtheit von Trägern wenigstens einem zweiten Sendergerät zugewiesen worden ist, wobei das Verfahren außerdem einen Schritt der inversen Zeit/Frequenz-Transformation umfasst, der dazu bestimmt ist, in den Trägern der zugewiesenen Gesamtheit von Trägern die Komponenten, die von einem ersten Mehrfachträgersignal stammen, das von dem ersten Sendergerät gesendet wurde, von jenen, die von wenigstens einem zweiten Mehrfachträgersignal stammen, das von wenigstens einem zweiten Client-Gerät gesendet wurde, zu trennen.

11. Vorrichtung zum Empfangen eines Signals, das wenigstens einem Mehrfachträgersignal entspricht, das eine Modulation des OQAM-Typs ausführt, das von wenigstens einem Sendergerät über einen Sendekanal gesendet wird, wobei das Signal aus einer zeitlichen Folge von Symbolen gebildet ist, die aus einer Gesamtheit von Datenelementen gebildet ist, die Folgendes enthält:

- Informations-Datenelemente mit reellen Werten, und
- wenigstens für bestimmte Symbole Referenz-Datenelemente, die Pilotsymbole genannt werden und wenigstens einem Empfänger bekannt sind, der dazu bestimmt ist, einen Empfang des Mehrfachträgersignals auszuführen,

wobei jedes der Datenelemente eine Trägerfrequenz des Signals moduliert, wobei eine Trägerfrequenz, die durch eines der Datenelemente moduliert wird, Träger genannt wird,
wobei dem Sendergerät eine Gesamtheit von Trägern zugewiesen wird,
**dadurch gekennzeichnet, dass** eine Pilotsymbolfolge, die zu dem Sendergerät gehört, zu einem gegebenen Zeitpunkt, TS, in das Mehrfachträgersignal über die zugewiesene Gesamtheit von Trägern eingesetzt worden ist, wobei die Pilotsymbolfolge Folgendes enthält:

- eine Folge von von Null verschiedenen komplexen Werten, die in die geraden oder ungeraden Träger eingesetzt werden, abwechselnd mit Null-Werten, die in die anderen Träger eingesetzt werden,
- wobei die von Null verschiedenen komplexen Werte der Pilotsymbolfolge in der Weise gewählt werden, dass das erzeugte modulierte Signal ebenso wie jede Zeit/Frequenz-Transformierte dieses Signals und jede inverse Transformierte dieser Zeit/Frequenz-Transformierten eine konstante Einhüllende besitzt,
- wobei eine Folge von Null-Werten die Träger der Gesamtheit zugewiesener Träger, die vor dem folgenden Zeitpunkt, TS + $\tau$0, eingesetzt werden, modulieren, wobei $\tau$0 der zeitliche Abstand zwischen zwei Symbolen ist,

wobei die Empfangsvorrichtung die folgenden Einheiten umfasst:

- Extrahieren komplexer Werte, die von Null verschiedenen Werten der Pilotsymbolfolge in den ungeraden oder geraden Trägern entsprechen, nach dem Durchgang durch den Sendekanal,
- Schätzen einer Frequenzantwort des Sendekanals an den ungeraden oder geraden Trägern ausgehend von den extrahierten komplexen Werten, und
- Schätzen einer Frequenzantwort des Sendekanals an den anderen geraden bzw. ungeraden Träger durch Frequenzinterpolation der Antwort des geschätzten Kanals an den ungeraden oder geraden Trägern.

12. Mehrfachträgersignal, das eine Modulation des OQAM-Typs ausführt und aus einer zeitlichen Folge von Symbolen gebildet ist, die aus einer Gesamtheit von Daten gebildet sind, wobei die Folge enthält:

- Informations-Datenelemente mit reellen Werten, und
- wenigstens für bestimmte Symbole Referenz-Datenelemente, die Pilotsymbole genannt werden und wenigstens einem Empfängergerät bekannt sind, das dazu bestimmt ist, einen Empfang des Mehrfachträgersignals auszuführen,

wobei jedes der Datenelemente eine Trägerfrequenz des Signals moduliert, wobei eine Trägerfrequenz, die durch eines der Datenelemente moduliert wird, Träger genannt wird,
wobei eine Gesamtheit von Trägern dem Sendergerät zugewiesen ist,
**dadurch gekennzeichnet, dass** es eine Folge von Pilotsymbolen enthält, die zu dem Sendergerät gehören und die zu einem gegebenen Zeitpunkt, TS, in das Mehrfachträgersignal über die zugewiesene Gesamtheit von Trägern eingesetzt wird, und dass die Pilotsymbolfolge Folgendes enthält:

- eine Folge von von Null verschiedenen komplexen Werten, die in die ungeraden oder geraden Träger eingesetzt werden, abwechselnd mit Null-Werten, die in die anderen geraden bzw. ungeraden Träger eingesetzt werden,
- wobei die von Null verschiedenen komplexen Werte der Pilotsymbolfolge in der Weise gewählt werden, dass das erzeugte modulierte Signal ebenso wie jede Zeit/Frequenz-Transformierte dieses Signals und jede inverse Transformierte dieser Zeit/Frequenz-Transformierten eine konstante Einhüllende besitzt,
- wobei eine Folge von Null-Werten die Träger der Gesamtheit von Trägern, die zu dem folgenden Zeitpunkt, TS + τ0, zugewiesen werden, moduliert, wobei τ0 der zeitliche Abstand zwischen zwei Symbolen ist.

**13.** Computerprogramm, das aus einem Kommunikationsnetz ferngeladen werden kann und/oder auf einem computerlesbaren Träger aufgezeichnet ist und/oder durch einen Prozessor ausführbar ist, **dadurch gekennzeichnet, dass** es Programmcodebefehle für die Ausführung des Sendeverfahrens nach einem der Ansprüche 1 bis 7 enthält.

**14.** Computerprogramm, das aus einem Kommunikationsnetz ferngeladen werden kann und/oder auf einem Computer lesbaren Träger aufgezeichnet ist und/oder durch einen Prozessor ausführbar ist, **dadurch gekennzeichnet, dass** es die Programmcodebefehle für die Ausführung des Empfangsverfahrens nach einem der Ansprüche 9 und 10 enthält.

**Claims**

**1.** Method for transmitting a multi-carrier signal (SE1, SE2) implementing an OQAM-type modulation intended for transmission via a transmission channel (CH1, CH2), formed by a temporal succession of symbols consisting of a set of data elements comprising:

- real-value informative data elements, and
- for at least some of said symbols, reference data elements, so-called pilots, known by at least one receiver designed for receiving the multi-carrier signal,

each of said data elements modulating a carrier frequency of said signal, a carrier frequency modulated by one of said data elements being called a carrier,
a set of carriers (M1, M2) being allocated to a transmitter equipment (UE1, UE2),
**characterized in that** said transmission method comprises a step (E4) of inserting a sequence of pilots (SP, SP') specific to said transmitter equipment (UE1, UE2) at a given time, TS, into the multi-carrier signal (SE1, SE2) on said allocated set of carriers, said sequence of pilots comprising:

- a sequence of non-zero complex values, inserted on odd or even carriers, alternating with zero values, inserted on the other carriers, respectively even or odd-numbered,
- the non-zero complex values of the sequence of pilots are chosen such that the modulated signal that is produced has a constant envelope, as does any time-frequency transform of this signal, and any inverse transform of this time-frequency transform, and
- a sequence of zero values modulating the carriers of the set of carriers allocated at the following time, TS+τ0, where τ0 is the temporal spacing between two symbols.

**2.** Method for transmitting a multi-carrier signal according to Claim **1, characterized in that** the sequence of non-zero complex values of the sequence of pilots is a CAZAC-type sequence of length, L, equal to half the number of carriers (M1, M2) allocated to the transmitter equipment (UE1, UE2).

**3.** Method for transmitting a multi-carrier signal according to Claim **2, characterized in that** the sequence of non-zero complex values of the sequence of pilots is a Zadoff-Chu-type sequence, defined by the following expression:

$$ZC(l) = e^{\frac{j\pi q l(l+1)}{N_{ZC}}}$$

where 1 is an index of the complex value in the sequence, q is an integer corresponding to a root sequence specific to the client equipment and $N_{ZC}$ is equal to the largest prime number smaller than the length, L, of the sequence.

4. Method for transmitting a multi-carrier signal according to Claim **2, characterized in that** the sequence of non-zero complex values of the sequence of pilots is a Björck-type sequence, defined by the following expression:

$$BS(u) = \frac{1}{\sqrt{L}} \cdot a,$$

$$a = \begin{cases} 1 \ for \ l = 0 \\ e^{j\left(\cos^{(1}/_{1+\sqrt{L}}\right)} for \ u=l^2 \ mod \ L \ and \ l=1,...,L-1 \\ e^{-j\left(\cos^{(1}/_{1+\sqrt{L}}\right)} otherwise \end{cases}$$

where                                                                                          and L is the length of the sequence.

5. Method for transmitting a multi-carrier signal according to one of the preceding claims, **characterized in that** the non-zero complex values of the sequence of pilots are multiplied by a phase rotation factor, FR.

6. Method for transmitting a multi-carrier signal according to one of the preceding claims, **characterized in that** the sequence of pilots is inserted into the multi-carrier signal at a non-zero time TS and further comprises a sequence of zero-values modulating the carriers of the set of carriers allocated to the preceding time, TS-τ0.

7. Method for transmitting a multi-carrier signal according to one of Claims **1** to **5, characterized in that** the sequence of pilots is inserted into the multi-carrier signal at a non-zero time TS, the informative data elements inserted at a preceding time, TS-τ0, modulating the carriers of the set of allocated carriers according to a cyclic-OQAM type modulation.

8. Device ($100_1$, $100_2$) for transmitting a multi-carrier signal (SE1, SE2) implementing an OQAM-type modulation intended for transmission via a transmission channel (CH1, CH2), formed by a temporal succession of symbols consisting of a set of data elements comprising:

   - real-value informative data elements, and
   - for at least some of said symbols, reference data elements, so-called pilots, known by at least one receiver designed for receiving the multi-carrier signal,

   each of said data elements modulating a carrier frequency of said signal, a carrier frequency modulated by one of said data elements being called a carrier,
   a set of carriers being allocated to a transmitter equipment,
   **characterized in that** said transmission device comprises a unit for inserting a sequence of pilots (SP1, SP2) specific to said transmitter equipment at a given time, TS, into the multi-carrier signal on said allocated set of carriers, said sequence of pilots comprising:

   - a sequence of non-zero complex values, inserted on odd or even carriers, alternating with zero values, inserted on the other carriers, respectively even or odd-numbered,
   - the non-zero complex values of the sequence of pilots are chosen such that the modulated signal that is produced has a constant envelope, as does any time-frequency transform of this signal, and any inverse transform of this time-frequency transform, and,
   - a sequence of zero values modulating the carriers of the set of carriers allocated at the following time, TS+τ0, where τ0 is the temporal spacing between two symbols.

9. Method for receiving a signal corresponding to at least one multi-carrier signal implementing an OQAM-type modulation, transmitted by at least one transmitter equipment via a transmission channel, said signal being formed of a temporal succession of symbols consisting of a set of data elements comprising:

   - real-value informative data elements, and
   - for at least some of said symbols, reference data elements, so-called pilots, known by at least one receiver designed for receiving the multi-carrier signal,

each of said data elements modulating a carrier frequency of said signal, a carrier frequency modulated by one of said data elements being called a carrier,

a set of carriers being allocated to said transmitter equipment,

**characterized in that**, a sequence of pilots specific to said transmitter equipment having been inserted into the multi-carrier signal on said allocated set of carriers, said sequence of pilots comprising:

- a sequence of non-zero complex values, inserted on odd or even carriers, alternating with zero values, inserted on the other carriers, at a given time, TS,
- the non-zero complex values of the sequence of pilots are chosen such that the modulated signal that is produced has a constant envelope, as does any time-frequency transform of this signal, and any inverse transform of this time-frequency transform, and
- a sequence of zero values modulating the carriers of the set of allocated carriers inserted at the following time, $TS+\tau 0$, where $\tau 0$ is the temporal spacing between two symbols,

said receiving method comprises:

- a step of extracting complex values corresponding to non-zero values of the sequence of pilots on the odd or even carriers, after passing through the transmission channel,
- a step of estimating a frequency response of said transmission channel on the odd or even carriers from the complex values extracted,
- a step of estimating a frequency response of the transmission channel on the other carriers, respectively even or odd by frequency interpolation of the channel response, estimated on the even or odd carriers.

**10.** Method for receiving a signal corresponding to at least one multi-carrier signal implementing an OQAM-type modulation according to Claim **9, characterized in that**, the set of carriers having been allocated to at least one second transmitter equipment, said method further comprises a step of implementing an inverse time-frequency transform for separating, on the carriers of the allocated set of carriers, the components originating from a first multi-carrier signal transmitted by the first transmitter equipment from those originating from at least one second multi-carrier signal transmitted by at least one second client equipment.

**11.** Device for receiving a signal corresponding to at least one multi-carrier signal implementing an OQAM-type modulation, transmitted by at least one transmitter equipment via a transmission channel, said signal being formed of a temporal succession of symbols consisting of a set of data elements comprising:

- real-value informative data elements, and
- for at least some of said symbols, reference data elements, so-called pilots, known by at least one receiver designed for receiving the multi-carrier signal,

each of said data elements modulating a carrier frequency of said signal, a carrier frequency modulated by one of said data elements being called a carrier,

a set of carriers being allocated to said transmitter equipment,

**characterized in that**, a sequence of pilots specific to said transmitter equipment having been inserted at a given time, TS, into the multi-carrier signal on said allocated set of carriers, said sequence of pilots comprising:

- a sequence of non-zero complex values, inserted on odd or even carriers, alternating with zero values, inserted on the other carriers,
- the non-zero complex values of the sequence of pilots are chosen such that the modulated signal that is produced has a constant envelope, as does any time-frequency transform of this signal, and any inverse transform of this time-frequency transform, and
- a sequence of zero values modulating the carriers of the set of allocated carriers inserted at the following time, $TS+\tau 0$, where $\tau 0$ is the temporal spacing between two symbols,

said reception device comprises the following units:

- a unit for extracting complex values corresponding to non-zero values of the sequence of pilots on the odd or even carriers, after passing through the transmission channel,
- a unit for estimating a frequency response of said transmission channel on the odd or even carriers from the complex values extracted, and

- a unit for estimating a frequency response of the transmission channel on the other carriers, respectively even or odd by frequency interpolation of the channel response, estimated on the even or odd carriers.

12. Multi-carrier signal implementing an OQAM-type modulation, formed by a temporal succession of symbols consisting of a data set comprising:

- real-value informative data elements, and
- for at least some of said symbols, reference data elements, so-called pilots, known by at least one receiver equipment designed for receiving the multi-carrier signal,

each of said data elements modulating a carrier frequency of said signal, a carrier frequency modulated by one of said data elements being called a carrier,
a set of carriers being allocated to said transmitter equipment,
**characterized in that** it comprises a sequence of pilots specific to said transmitter equipment, inserted at a given time, TS, into the multi-carrier signal on said allocated set of carriers and **in that** said sequence of pilots comprises:

- a sequence of non-zero complex values, inserted on odd or even carriers, alternating with zero values, inserted on the other carriers, respectively even or odd-numbered,
- the non-zero complex values of the sequence of pilots are chosen such that the modulated signal that is produced has a constant envelope, as does any time-frequency transform of this signal, and any inverse transform of this time-frequency transform, and
- a sequence of zero values modulating the carriers of the set of carriers allocated at the following time, TS+$\tau$0, where $\tau$0 is the temporal spacing between two symbols.

13. Computer program downloadable from a communication network and/or recorded on a computer-readable and/or processor-executable medium, **characterized in that** it comprises program code instructions for implementing the transmission method according to one of Claims **1** to **7.**

14. Computer program downloadable from a communication network and/or recorded on a computer-readable and/or processor-executable medium, **characterized in that** it comprises program code instructions for implementing the transmission method according to either of Claims **9** and **10.**

| | | | | |
|---|---|---|---|---|
| **0** | $a_{0,1}$ | **0** | | |
| 0 | $ja_{0,1}$ | 0 | | |
| 0 | $-a_{0,1}$ | 0 | | |
| 0 | $a_{1,1}$ | 0 | | |
| 0 | $ja_{1,1}$ | 0 | | **Data** |
| 0 | $-a_{1,1}$ | 0 | | |
| ... | ... | ... | | |
| 0 | $a_{M/3,1}$ | 0 | | |
| 0 | $ja_{M/3,1}$ | 0 | | |
| 0 | $-a_{M/3,1}$ | 0 | | |

SP

FIG. 1

UE1

UE2

UE6

UE3

UE5

ER

UE3

UE4

RT

FIG. 2

FIG. 3

FIG. 4

```
                    │ SR
                    ▼
            ┌─────────────────┐
            │                 │
   R1 ∿     │  DEMOD          │
            │  OQAM           │
            │                 │
            └─────────────────┘
                    │
                    ▼
            ┌─────────────────┐
            │                 │
   R2 ∿     │  EST. CH        │  ◄──── SP1, SP2
            │                 │
            └─────────────────┘
                    │  $\widehat{H^{UE1}}, \widehat{H^{UE2}}$
                    ▼
            ┌─────────────────┐
            │                 │
   R3 ∿     │  EQUAL          │
            │                 │
            └─────────────────┘
                    │
                    ▼
            ┌─────────────────┐
            │                 │
   R4 ∿     │  DESINTER       │
            │                 │
            └─────────────────┘
                    │
                    ▼
            ┌─────────────────┐
            │                 │
   R5 ∿     │  DECOD          │
            │                 │
            └─────────────────┘
              EDD1 │ EDD2
                   ▼
```

## FIG. 5

| ZC1 | 0 | |
|------|---|
| 0 | 0 |
| ZC2 | 0 |
| 0 | 0 |
| ZC3 | 0 |
| 0 | 0 |
| ... | ... |
| 0 | 0 |
| ZCMi/2 | 0 |
| 0 | 0 |

**Data**

SP

FIG. 6

| BJ1 | 0 | |
|------|---|
| 0 | 0 |
| BJ2 | 0 |
| 0 | 0 |
| BJ3 | 0 |
| 0 | 0 |
| ... | ... |
| 0 | 0 |
| BJM/2 | 0 |
| 0 | 0 |

**Data**

SP'

FIG. 7

FIG. 8

FIG. 9

FIG. 10

FIG. 11

FIG. 12a

FIG. 12b

MSE

FIG. 13a

FIG. 13b

**EP 3 202 077 B1**

## RÉFÉRENCES CITÉES DANS LA DESCRIPTION

**Littérature non-brevet citée dans la description**

- **LÉLÉ et al.** 2 dB better than CP-OFDM with OFDM/OQAM for preamble-based channel estimation. *les Proceedings de la conférence ICC (International Conférence on Communications),* Mai 2008
- **DU et al.** Novel Preamble-Based Channel Estimation for OFDM/OQAM Systems. *les Proceedings de la conférence internationale IEEE sur les Communications,* 14 Juin 2009, 1-6
- **FUSCO et al.** Joint Symbol timing and CFO estimation in multiuser OFDM/OQAM systems. *Signal Processing Advances in Wireless Communications,* 21 Juin 2009

- **HU et al.** Preamble Design with ICI Cancellation for Channel Estimation in OFDM/OQAM System. *IEICE Transactions on Communications,* Janvier 2010
- **CHU et al.** Polyphasé Codes with good periodic correlation properties. *IEEE Transactions on information theory,* 1972, 531-532
- Long Term Evolution. TS 36.211 V9.1.0. 3GPP LTE, Mars 2010
- **GASAZZA.** Finite Frame : Theory and applications. 2010, 229
- **LIN et al.** Multi-carrier modulation analysis and WCP-COQAM proposai. *EURASIP Journal on Advances in Signal Processing,* Mai 2014